# EUROPEAN PATENT SPECIFICATION

(11) **EP 3 620 361 B1**
(45) Date of publication and mention of the grant of the patent: **09.12.2020**
(21) Application number: 19195258.9
(22) Date of filing: 04.09.2019
(51) Int. Cl.: B62K 5/027, B62K 5/08, B62K 5/10, B62K 5/05

(54) **LEANING VEHICLE**
NEIGEFAHRZEUG
VÉHICULE À INCLINAISON

(30) Priority: 07.09.2018 JP 2018167914
(43) Date of publication of application: 11.03.2020
(73) Proprietor: YAMAHA HATSUDOKI KABUSHIKI KAISHA, Iwata-shi, Shizuoka 438-8501 (JP)
(72) Inventor: TAKANO, Kazuhisa, Iwata-shi, Shizuoka 438-8501 (JP)
(74) Representative: Grünecker Patent- und Rechtsanwälte PartG mbB

(56) References cited:
- EP-A1- 3 300 999
- WO-A1-2017/115274

## Description

### Technical Field

The present disclosure relates to a leaning vehicle equipped with a leanable body frame and two front wheels that are arranged side by side in a left-right direction of the body frame.

### Background Art

A leaning vehicle disclosed in Patent Literature 1 includes a body frame that leans to the left or right of the vehicle when the vehicle turns left or right and two front wheels that are arranged side by side in a left-right direction of the body frame. This type of vehicle is a vehicle which is able to turn with its body frame leaning from a vertical direction. More specifically, the body frame leans to the right of the vehicle when the vehicle turns to the right, while when the vehicle turns to the left, the body frame leans to the left of the vehicle.

The leaning vehicle disclosed in Patent Literature 1 includes a link mechanism. The link mechanism is disposed above the two front wheels. The link mechanism is configured so as to change positions of the two front wheels relative to the body frame to thereby cause the body frame to lean to the left or right of the vehicle.

Patent Literature 2 discloses an adaptor configured to be mounted on each of a left front wheel and a right front wheel to change a tread width of a leaning vehicle. When referred to in this specification, the "tread width" means a distance between a ground contact point of a left front wheel and a ground contact point of a right front wheel in a left-right direction of a body frame.
In addition, documents EP 3 300 999 A1 and WO 2017/115274 A1 disclose leaning vehicles according to the preamble of entity claim 1 and method claim 9.

### Prior Art Literature

[Patent Literature 1] Japanese Patent Publication No. 2005-313876
[Patent Literature 2] International Patent Publication No. 2008/067913

### Summary of Disclosure

An object of the invention is to enable a change in tread width of a leaning vehicle by use of a method based on a concept different from the conventional ones.

Said object is achieved by a leaning vehicle according to claim 1 and a method according to claim 9.
There is provided a leaning vehicle comprising:
a body frame that is leanable leftward and rightward of the leaning vehicle;
a left front wheel and a right front wheel that are arranged side by side in a left-right direction of the body frame;
a left suspension portion supporting the left front wheel such that the left front wheel is turnable about a left steering axis;
a right suspension portion supporting the right front wheel such that the right front wheel is turnable about a right steering axis; and
a link mechanism configured to change positions of the left front wheel and the right front wheel relative to the body frame to cause the body frame to lean leftward or rightward of the leaning vehicle;
wherein the link mechanism comprises:
   an upper cross member;
   a lower cross member disposed below the upper cross member in an up-down direction of the body frame;
   a left side member disposed such that the left steering axis extends though the left side member; and
   a right side member disposed such that the right steering axis extends through the right side member;
wherein the left side member comprises:
   an upper left axis supporting portion defining an upper left leaning axis extending in a front-rear direction of the body frame; and
   a lower left axis supporting portion defining a lower left leaning axis extending in the front-rear direction of the body frame;
wherein the right side member comprises:
   an upper right axis supporting portion defining an upper right leaning axis extending in a front-rear direction of the body frame; and
   a lower right axis supporting portion defining a lower right leaning axis extending in the front-rear direction of the body frame;
   wherein a left portion of the upper cross member is coupled to the left side member such that the left portion of the upper cross member is turnable about the upper left leaning axis;
   wherein a left portion of the lower cross member is coupled to the left side member such that the left portion of the lower cross member is turnable about the lower left leaning axis;
   wherein a right portion of the upper cross member is coupled to the right side member such that the right portion of the upper cross member is turnable about the upper right leaning axis;
   wherein a right portion of the lower cross member is coupled to the right side member such that the right portion of the lower cross member is turnable about the lower right leaning axis;
   wherein when the body frame is caused to lean leftward or rightward of the leaning vehicle by changing the positions of the left front wheel and the right front wheel relative to the body frame, as viewed from the front-rear direction of the body frame, not only a straight line connecting the upper left leaning axis and the upper right leaning axis extends parallel to a straight line connecting the lower left leaning axis and the lower right leaning axis but also a straight line connecting the upper left leaning axis and the lower left leaning axis extends parallel to a straight line connecting the upper right leaning axis and the lower right leaning axis;
   wherein at least one of the upper left leaning axis and the lower left leaning axis is offset from the left steering axis in the left-right direction of the body frame as viewed from the front-rear direction of the body frame;
   wherein at least one of the upper right leaning axis and the lower right leaning axis is offset from the right steering axis in the left-right direction of the body frame as viewed from the front-rear direction of the body frame;
   wherein one of a first state and a second state is selectively taken;
   wherein in a case where the first state is selected:
      at least one of the upper left leaning axis and the lower left leaning axis in the left side member is offset leftward from the left steering axis as viewed from the front-rear direction of the body frame; and
      at least one of the upper right leaning axis and the lower right leaning axis in the right side member is offset rightward from the right steering axis as viewed from the front-rear direction of the body frame;
   wherein in a case where the second state is selected:
      at least one of the upper left leaning axis and the lower left leaning axis in the left side member is offset rightward from the left steering axis as viewed from the front-rear direction of the body frame; and
      at least one of the upper right leaning axis and the lower right leaning axis in the right side member is offset leftward from the right steering axis as viewed from the front-rear direction of the body frame; and
   wherein in any case where the first state or the second state is selected:
      an offset amount in association with the left side member is equal to an offset amount in association with the right side member;
      a left straight line connecting the upper left leaning axis and the lower left leaning axis overlaps a ground contact surface of the left front wheel as viewed from the front-rear direction of the body frame; and
      a right straight line connecting the upper right leaning axis and the lower right leaning axis overlaps a ground contact surface of the right front wheel as viewed from the front-rear direction of the body frame.

According to the configuration described above, by disposing a first side member, that is to be mounted on the leaning vehicle and is configured to serve as the left side member in the first state, in a position where a second side member, that is to be mounted on the leaning vehicle, in the first state is disposed, it is possible to cause the first side member to serve as the right side member in the second state.. As this occurs, the inclining direction of a the right straight line relative to the right steering axis in the second state becomes opposite to the inclining direction of the right straight line relative to the right steering axis in the first state. Similarly, by disposing the second side member, that is configured to serve as the right side member in the first state, in the position where the first side member in the first state is disposed, it is possible to cause the second side member to serve as the left side member in the second state. As this occurs, the inclining direction of the left straight line relative to the left steering axis in the second state becomes opposite to the inclining direction of the left straight line relative to the left steering axis in the first state. Consequently, the tread width changes between the first state and the second state. That is, the first state and the second state can be switched over by exchanging the first side member with the second side member in position. Consequently, the tread width of the leaning vehicle can be changed by the method different from the conventional concept in which an extra part such as an adaptor is used.

Further, in both of the first state and the second state, the left straight line and the right straight line respectively overlap the ground contact surface of the left front wheel and the ground contact surface of the right front wheel as viewed from the front-rear direction of the body frame. This can suppress the influence to be imposed on the steering property of the leaning vehicle by the switching between the first state and the second state.

The above leaning vehicle may be configured such that:
in the case where the first state is selected:
   both of the upper left leaning axis and the lower left leaning axis in the left side member is offset leftward from the left steering axis as viewed from the front-rear direction of the body frame; and
   both of the upper right leaning axis and the lower right leaning axis in the right side member is offset rightward from the right steering axis as viewed from the front-rear direction of the body frame; and
in the case where the second state is selected:
   both of the upper left leaning axis and the lower left leaning axis in the left side member is offset rightward from the left steering axis as viewed from the front-rear direction of the body frame; and
   both of the upper right leaning axis and the lower right leaning axis in the right side member is offset leftward from the right steering axis as viewed from the front-rear direction of the body frame.

According to this configuration, it is possible to easily reduce the inclination of the left straight line relative to the left steering axis and the inclination of the right straight line relative to the right steering axis. Consequently, although the first state and the second state can be switched over to change the tread width, it is possible to suppress the influence to be imposed on the steering property by the switching.

In this case, the above leaning vehicle may be configured such that:
an offset amount of the upper left leaning axis is different from an offset amount of the lower left leaning axis; and
an offset amount of the upper right leaning axis is different from an offset amount of the lower right leaning axis.

According to this configuration, the inclination of the left straight line relative to the left steering axis and the inclination of the right straight line relative to the right steering axis can be adjusted easily. Consequently, although it is enabled to switch over the first state and the second state to change the tread width, it is possible to facilitate the design for suppressing the influence to be imposed on the steering property by the switching.

The above leaning vehicle may be configured such that a distance between the lower left leaning axis at the lower left axis supporting portion and the lower right leaning axis at the lower right axis supporting portion is equal to a distance between the upper left leaning axis at the upper left axis supporting portion and the upper right leaning axis at the upper right axis supporting portion.

According to this configuration, it is possible to suppress a change in inertial moment of the leaning vehicle occurring in association with the switching between the first state and the second state. Consequently, it is possible to suppress a change in operational feeling of the leaning vehicle in association with the switching between the first state and the second state.

The above leaning vehicle may be configured to comprise:
a steering member that is turnable relative to the body frame; and
a steering force transmission mechanism configured to cause the left suspension portion and the right suspension portion to turn about the left steering axis and the right steering axis respectively, in a direction corresponding to a turning direction of the steering member.

Here, the leaning vehicle may be configured such that:
the steering force transmission mechanism comprises:
   a transmission member configured to transmit a turning force of the steering member to the left suspension portion and the right suspension portion;
   a left leaning axis supporting portion defining a left leaning axis extending in the front-rear direction of the body frame; and
   a right leaning axis supporting portion defining a right leaning axis extending in the front-rear direction of the body frame;
a left portion of the transmission member is coupled to the left suspension portion such that the left portion of the transmission member is turnable about the left leaning axis;
a right portion of the transmission member is coupled to the right suspension portion such that the right portion of the transmission member is turnable about the right leaning axis; and
in any case where the first state or the second state is selected:
   the left straight line intersects the left axis supporting portion as viewed from the front-rear direction of the body frame; and
   the right straight line intersects the right axis supporting portion as viewed from the front-rear direction of the body frame.

Even with this configuration, it is possible to suppress a change in inertial moment of the leaning vehicle occurring in association with the switching between the first state and the second state. Consequently, it is possible to suppress a change in operational feeling of the leaning vehicle in association with the switching between the first state and the second state.

In this case, it is preferable that the above leaning vehicle is configured such that a distance between the left leaning axis at the left axis supporting portion and the right leaning axis at the right axis supporting portion is equal to a distance between the upper left leaning axis at the upper left axis supporting portion and the upper right leaning axis at the upper right axis supporting portion.

The above leaning vehicle may be configured such that:
a scrub radius of the left front wheel in the case where the first state is selected is equal to a scrub radius of the left front wheel in the case where the second state is selected; and
a scrub radius of the right front wheel in the case where the first state is selected is equal to a scrub radius of the right front wheel in the case where the second state is selected.

According to this configuration, it is possible to suppress a change in steering resistance of the left front wheel and the right front wheel occurring in association with the switching between the first state and the second state. Consequently, it is possible to suppress a change in operational feeling of the leaning vehicle in association with the switching between the first state and the second state.

The above leaning vehicle may be configured to comprise:
a steering member that is turnable relative to the body frame; and
a rear wheel disposed behind the left front wheel and the right front wheel in the front-rear direction of the body frame.

Here, the leaning vehicle may be configured such that in a case where the body frame stands upright and the steering member is placed in a neutral position, as viewed from the left-right direction of the body frame, a straight line connecting a ground contact point of the left front wheel or the right front wheel and a ground contact point of the rear wheel extends parallel to each of the upper left leaning axis, the lower left leaning axis, the upper right leaning axis, and the lower right leaning axis.

According to this configuration, the contact loads of the left front wheel and the right front wheel against the road surface tend to be uniform. Consequently, the service life of tires on the left front wheel and the right front wheel can be expected to be extended.

### Brief Description of Drawings

Fig. 1 is a left side view entirely showing a leaning vehicle according to one embodiment.
Fig. 2 is a left side view showing a portion of an internal structure of the leaning vehicle of Fig. 1.
Fig. 3 is a front view showing a front portion of the leaning vehicle of Fig. 1.
Fig. 4 is a plan view showing the front portion of the leaning vehicle of Fig. 1.
Fig. 5 is a plan view showing the front portion of the leaning vehicle of Fig. 1 when leftward steering is performed.
Fig. 6 is a front view showing the front portion of the leaning vehicle of Fig. 1 when leftward leaning is performed.
Fig. 7 is a front view showing the front portion of the leaning vehicle of Fig. 1 when leftward steering and leftward leaning are performed.
Fig. 8 shows a first side member and a second side member to be mounted on the leaning vehicle of Fig. 1.
Fig. 9 schematically shows the leaning vehicle of Fig. 1 in a case where a first state is selected.
Fig. 10 schematically shows the leaning vehicle of Fig. 1 in a case where a second state is selected.
Fig. 11A shows an alternative example of the first side member.
Fig. 11B shows an alternative example of the first side member.
Fig. 11C shows an alternative example of the first side member.

### Detailed Description of Embodiments

Referring to the accompanying drawings, an exemplary embodiment will be described in detail below.

In the accompanying drawings, an arrow F denotes a front or forward direction of a leaning vehicle. An arrow B denotes a back/rear or backward/rearward direction of the leaning vehicle. An arrow U denotes an up or upward direction of the leaning vehicle. An arrow D denotes a down or downward direction of the leaning vehicle. An arrow R denotes a right or rightward direction of the leaning vehicle. An arrow L denotes a left or leftward direction of the leaning vehicle.

A leaning vehicle turns with a body frame being caused to lean to the left or right of the leaning vehicle from a vertical direction. Then, in addition to the directions based on the leaning vehicle, directions based on the body frame will be defined. In the accompanying drawings, an arrow FF denotes a front or forward direction of the body frame. An arrow FB denotes a back/rear or backward/rearward of the body frame. An arrow FU denotes an up or upward direction of the body frame. An arrow FD denotes a down or downward direction of the body frame. An arrow FR denotes a right or rightward direction of the body frame. An arrow FL denotes a left or leftward direction of the body frame.

In this description, a "front-rear direction of the body frame," a "left-right direction of the body frame" and an "up-down direction of the body frame" mean a front-rear direction, a left-right direction and an up-down direction based on the body frame when viewed from a rider who rides the leaning vehicle. "A side of or sideways of the body frame" means directly on the right or left in the left-right direction of the body frame.

In this description, an expression "extending in the front-rear direction of the leaning vehicle body frame" includes a fact that it extends while being inclined in relation to the front-rear direction of the leaning vehicle body frame and means that it extends in a direction closer to the front-rear direction of the leaning vehicle body frame than the left-right direction and up-down direction of the leaning vehicle body frame.

In this description, an expression "extending in the left-right direction of the leaning vehicle body frame" includes a fact that it extends while being inclined in relation to the left-right direction of the leaning vehicle body frame and means that it extends in a direction closer to the left-right direction of the leaning vehicle body frame than the front-rear direction and up-down direction of the leaning vehicle body frame.

In this description, an expression "extending in the up-down direction of the leaning vehicle body frame" includes a fact that it extends while being inclined in relation to the up-down direction of the leaning vehicle body frame and means that it extends in a direction closer to the up-down direction of the leaning vehicle body frame than the left-right direction and front-rear direction of the leaning vehicle body frame.

In this description, an expression reading the "leaning vehicle is standing upright or in an upright state" or the "body frame is standing upright or in the upright state" means a state in which the leaning vehicle is not steered at all and the up-down direction of the body frame coincides with the vertical direction. In this state, the directions based on the leaning vehicle coincide with the directions based on the body frame. When the leaning vehicle is turning with the body frame caused to lean to the left or right from the vertical direction, the left-right direction of the leaning vehicle does not coincide with the left-right direction of the body frame. Similarly, the up-down direction of the leaning vehicle does not coincide with the up-down direction of the body frame. However, the front-rear direction of the leaning vehicle coincides with the front-rear direction of the body frame.

In this description, an expression reading "directly on the left of a member A in the left-right direction of the body frame" denotes a space through which the member A passes when the member A is translated to the left in the left-right direction of the body frame. An expression reading "directly on the right of the member A" is also defined in the same way.

In this description, an expression reading "on the left of the member A in the left-right direction of the body frame" includes not only the space through which the member A passes when the member A is translated to the left in the left-right direction of the body frame but also a space which expands from the space in directions which are at right angles to the left-right direction of the body frame. An expression reading "on the right of the member A" is also defined in the same way.

In this description, an expression reading "directly above the member A in the up-down direction of the body frame" denotes a space through which the member A passes when the member A is translated upwards in the up-down direction of the body frame. An expression reading "directly below the member A" is also defined in the same way.

In this description, an expression reading "above the member A in the up-down direction of the body frame" includes not only the space through which the member A passes when the member A is translated upwards in the up-down direction of the body frame but also a space which expands from the space in directions which are at right angles to the up-down direction of the body frame. An expression reading "below the member A" is also defined in the same way.

In this description, an expression reading "directly ahead of the member A in the front-rear direction of the body frame" denotes a space through which the member A passes when the member A is translated to the front in the front-rear direction of the body frame. An expression reading "directly behind the member A" is also defined in the same way.

In this description, an expression reading "ahead of the member A in the front-rear direction of the body frame" includes not only the space through which the member A passes when the member A is translated to the front in the front-rear direction of the body frame but also a space which expands from the space in directions which are at right angles to the front-rear direction of the body frame. An expression reading "behind the member A" is also defined in the same way.

In this description, "rotation, rotating or rotated" means that a member is displaced at an angle of 360 degrees or more about an axis thereof. In this description, "turn, turning or turned" means that a member is displaced at an angle less than 360 degrees about an axis thereof.

In this description, "connected" or "coupled" specifies not only a case where one member and another member are directly connected but also a case where one member and another member are indirectly connected by way of still another member.

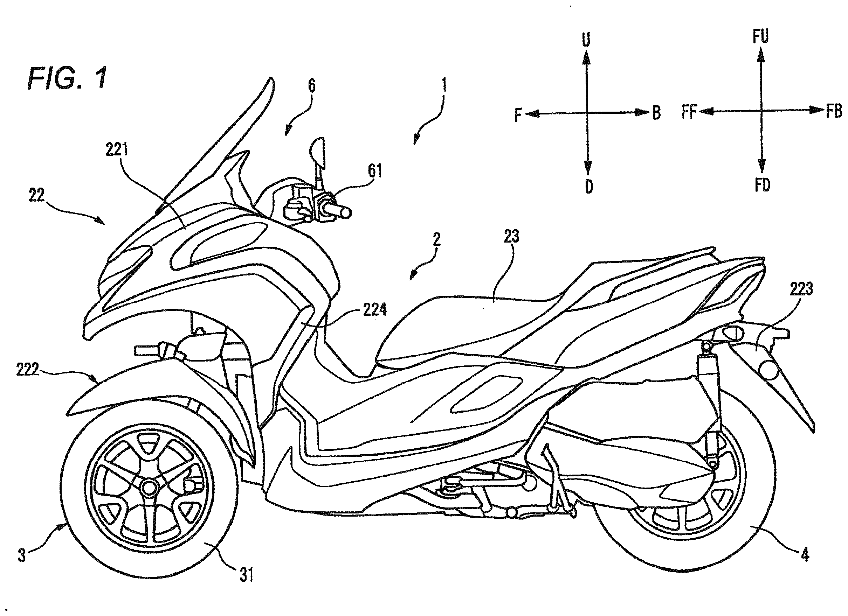

Referring to Figs. 1 to 10, a leaning vehicle 1 according to an embodiment of the invention will be described. As shown in Fig. 1, the vehicle 1 includes a vehicle main body portion 2, two front wheels 3, and a rear wheel 4.

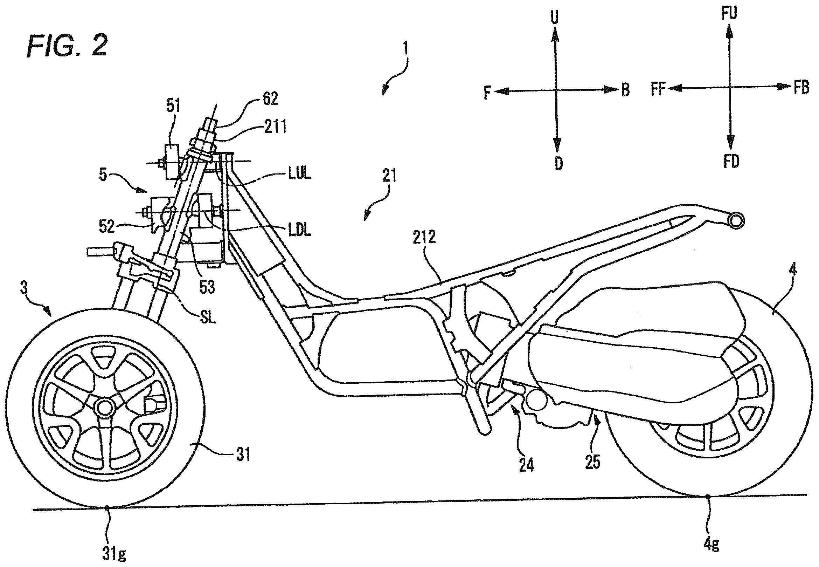

The vehicle main body portion 2 includes a body frame 21, a body cover 22, and a seat 23. The body frame 21 is covered with the vehicle body cover 22. Fig. 2 shows the body frame 21 with the body cover 22 and the seat 23 removed from it.

In Figs. 1 and 2, the body frame 21 stands upright. The following description, which will be made while referring to Figs. 1 and 2, is based on the understanding that the body frame 21 stands upright. Figs. 1 and 2 are left side views of the whole of the leaning vehicle 1 as seen from a left side thereof in the left-right direction of the body frame 21.

As shown in Fig. 2, the vehicle main body portion 2 further includes a power unit 24 and a rear arm 25. The body frame 21 includes a head pipe 211 and a main frame 212.

The head pipe 211 is disposed at a front portion of the leaning vehicle 1. When seeing the leaning vehicle 1 from the left-right direction of the body frame 21, an upper portion of the head pipe 211 is disposed ahead of a lower portion of the head pipe 211 in a front-rear direction of the body frame 21.

The main frame 212 is connected to the head pipe 211. The main frame 212 is disposed behind the head pipe 211 in the front-rear direction of the body frame 21. The main frame 212 supports the power unit 24 and the rear arm 25. Although not shown in Fig. 2, the main frame 212 also supports the seat 23.

The power unit 24 includes a power source such as an internal combustion engine or an electric motor and a transmission mechanism such as a transmission. Driving force generated by the power source is transmitted to the rear wheel 4 by way of the transmission mechanism.

The rear arm 25 extends in the front-rear direction of the body frame 21. A front end portion of the rear arm 25 is supported on the main frame 212 and is allowed to swing up and down about an axis that extends in the left-right direction of the body frame 21. A rear end portion of the rear arm 25 supports the rear wheel 4.

The body cover 22 is a body component that at least partially covers components that makes up the leaning vehicle 1. The body cover 22 includes a front cover 221, two front fenders 222, a rear fender 223 and a leg shield 224.

The front cover 221 is disposed ahead of the seat 23 in the front-rear direction of the body frame 21. The front cover 221 is disposed so as not to be displaced relative to the body frame 21.

At least portions of the individual front fenders 222 are individually disposed directly below the front cover 221. At least portions of the individual front fenders 222 are disposed above the individual front wheels 3.

The two front wheels 3 are disposed below the head pipe 211 in an up-down direction of the body frame 21. At least portions of the two front wheels 3 are disposed directly below the front cover 221 in the up-down direction of the body frame 21.

The rear wheel 4 is at least partially disposed below the seat 23 in the up-down direction of the body frame 21. The rear wheel 4 is at least partially disposed directly below the rear fender 223 in the up-down direction of the body frame 21.

The leg shield 224 is disposed behind the two front wheels 3 and ahead of the seat 23 in the front-rear direction of the body frame 21. The leg shield 224 is disposed in a position where the leg shield 224 at least partially covers the legs of the rider who sits on the seat 23 when viewed from the front of the leaning vehicle 1.

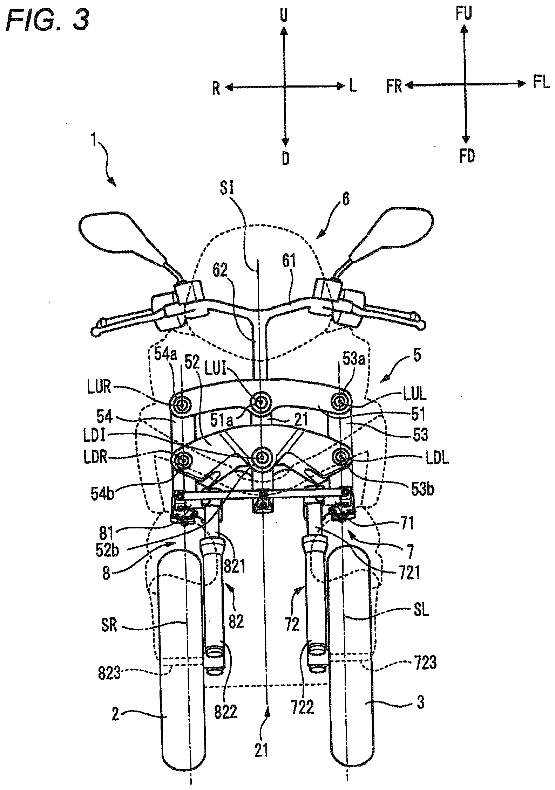

Fig. 3 is a front view of a front portion of the leaning vehicle 1 as seen from the front of the leaning vehicle 1 in the front-rear direction of the body frame 21. In Fig. 3, the body frame 21 stands upright. The following description, which will be made while referring to Fig. 3, is based on the understanding that the body frame 21 stands upright. In Fig. 3, most of those indicated by solid lines are seen through the front cover 221, the two front fenders 222, and the leg shield 224 which are indicated by dashed lines.

The two front wheels 3 include a left front wheel 31 and a right front wheel 32. The left front wheel 31 is disposed on the left of the head pipe 211, which is part of the body frame 21, in the left-right direction of the body frame 21. The right front wheel 32 is disposed on the right of the head pipe 211 in the left-right direction of the body frame 21. The left front wheel 31 and the right front wheel 32 are arranged side by side in the left-right direction of the body frame 21.

The two front fenders 222 include a left fender and a right fender. The left fender at least partially covers an upper face of the left front wheel 31. The right fender at least partially covers an upper surface of the right front wheel 32.

The leaning vehicle 1 includes a steering mechanism 6. The steering mechanism 6 includes a handlebar 61 and a steering shaft 62. The steering shaft 62 extends downwards from an intermediate portion of the handlebar 61 in relation to the left-right direction thereof. The steering shaft 62 is supported on the head pipe 211 via an intermediate steering axis supporting portion (not shown). This enables the steering shaft 62 to turn about an intermediate steering axis SI relative to the head pipe 211.

The leaning vehicle 1 includes a link mechanism 5. In this embodiment, the link mechanism 5 adopts a four parallel joint link system (also referred to as a parallelogram link).

The link mechanism 5 is disposed above the left front wheel 31 and the right front wheel 32 in the up-down direction of the body frame 21. The link mechanism 5 includes an upper cross member 51, a lower cross member 52, a left side member 53 and a right side member 54. The link mechanism 5 is not interlocked with the turning of the steering shaft 62 about the intermediate steering axis SI which occurs in association with the operation of the handlebar 61. That is, the link mechanism 5 does not turn about the intermediate steering axis SI relative to the body frame 21.

The head pipe 211 has an upper intermediate leaning axis supporting portion 211a. An intermediate portion of the upper cross member 51 is supported on the head pipe 211 via the upper intermediate leaning axis supporting portion 211a. The upper cross member 51 can turn relative to the head pipe 211 about an upper intermediate leaning axis LUI that passes through the upper intermediate leaning axis supporting portion 211a and extends in the front-rear direction of the body frame 21.

The head pipe 211 has a lower intermediate leaning axis supporting portion 211b. An intermediate portion of the lower cross member 52 is supported on the head pipe 211 via the lower intermediate leaning axis supporting portion 211b. The lower cross member 52 can turn relative to the head pipe 211 about a lower intermediate leaning axis LDI that passes through the lower intermediate leaning axis supporting portion 211b and extends in the front-rear direction of the body frame 21.

The left side member 53 has an upper left leaning axis supporting portion 53a. A left portion of the upper cross member 51 is coupled with the left side member 53 via the upper left leaning axis supporting portion 53a. The left portion of the upper cross member 51 is a portion of the upper cross member 51 that is positioned on the left of the upper intermediate leaning axis supporting portion 211a in the left-right direction of the body frame 21. The upper cross member 51 can turn relative to the left side member 53 about an upper left leaning axis LUL that passes through the upper left leaning axis supporting portion 53a and extends in the front-rear direction of the body frame 21.

The right side member 54 has an upper right leaning axis supporting portion 54a. A right portion of the upper cross member 51 is coupled with the right side member 54 via the upper right leaning axis supporting portion 54a. The right portion of the upper cross member 51 is a portion of the upper cross member 51 that is positioned on the right of the upper intermediate leaning axis supporting portion 211a in the left-right direction of the body frame 21. The upper cross member 51 can turn relative to the right side member 54 about an upper right leaning axis LUR that passes through the upper right leaning axis supporting portion 54a and extends in the front-rear direction of the body frame 21.

The left side member 53 has a lower left leaning axis supporting portion 53b. A left portion of the lower cross member 52 is coupled with the left side member 53 via the lower left leaning axis supporting portion 53b. The left portion of the lower cross member 52 is a portion of the lower cross member 52 that is positioned on the left of the lower intermediate leaning axis supporting portion 211b in the left-right direction of the body frame 21. The lower cross member 52 can turn relative to the left side member 53 about a lower left leaning axis LDL that passes through the lower left leaning axis supporting portion 53b and extends in the front-rear direction of the body frame 21.

The right side member 54 has a lower right leaning axis supporting portion 54b. A right portion of the lower cross member 52 is coupled with the right side member 54 via the lower right leaning axis supporting portion 54b. The right portion of the lower cross member 52 is a portion of the lower cross member 52 that is positioned on the right of the lower intermediate leaning axis supporting portion 211b in the left-right direction of the body frame 21. The lower cross member 52 can turn relative to the right side member 54 about a lower right leaning axis LDR that passes through the lower right leaning axis supporting portion 54b and extends in the front-rear direction of the body frame 21.

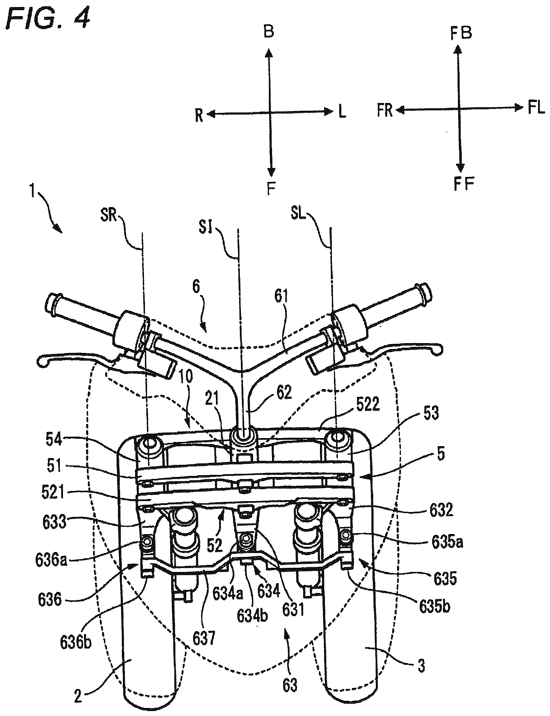

Fig. 4 is a plan view of the front portion of the leaning vehicle 1 as viewed from above in the up-down direction of the body frame 21. In Fig. 4, the body frame 21 stands upright. The following description, which will be made while referring to Fig. 4, is based on the understanding that the body frame 21 stands upright. In Fig. 4, most of those indicated by solid lines are seen through the front cover 221, and the two front fenders 222.

The upper cross member 51 is disposed ahead of the head pipe 211 in the front-rear direction of the body frame 21. The upper cross member 51 is a plate-like member that extends in the left-right direction of the body frame 21 without being curved in the front-rear direction of the body frame 21.

As shown in Figs. 3 and 4, the lower cross member 52 is disposed below the upper cross member 51 in the up-down direction of the body frame 21. The lower cross member 52 includes a front element 521 and a rear element 522. The front element 521 is disposed ahead of the head pipe 211, the left side member 53 and the right side member 54 in the front-rear diction of the body frame 21. The rear element 522 is disposed behind the head pipe 211, the left side member 53 and the right side member 54 in the front-rear diction of the body frame 21. The front element 521 and the rear element 522 extend in the left-right direction of the body frame 21.

As shown in Figs. 3 and 4, the left side member 53 is disposed directly on the left of the head pipe 211 in the left-right direction of the body frame 21. The left side member 53 is disposed above the left front wheel 31 in the up-down direction of the body frame 21. The left side member 53 extends in a direction in which the head pipe 211 extends. An upper portion of the left side member 53 is disposed behind a lower portion thereof in the front-rear direction of the body frame 21.

As shown in Figs. 3 and 4, the right side member 54 is disposed directly on the right of the head pipe 211 in the left-right direction of the body frame 21. The right side member 54 is disposed above the right front wheel 32 in the up-down of the body frame 21. The right side member 54 extends in the direction in which the head pipe 211 extends. An upper portion of the right side member 54 is disposed behind a lower portion thereof in the front-rear direction of the body frame 21.

The upper cross member 51, the lower cross member 52, the left side member 53 and the right side member 54 are supported on the head pipe 211 so that a straight line connecting the upper left leaning axis LUL and the upper right leaning axis LUR extends parallel to a straight line connecting the lower left leaning axis LDL and the lower right leaning axis LDR when seeing them from the front-rear direction of the body frame 21 and that a straight line connecting the upper left leaning axis LUL and the lower left leaning axis LDL extends parallel to a straight line connecting the upper right leaning axis LUR and the lower right leaning axis LDR when seeing them from the front-rear direction of the body frame 21.

As shown in Fig. 3, the leaning vehicle 1 includes a left suspension portion 7. The left suspension portion 7 includes a left bracket 71 and a left shock absorbing device 72.

The left bracket 71 includes a left turnable member (not shown) at an upper portion thereof. The left turnable member is disposed in an interior of the left side member 53 and extends in the same direction as an extending direction of the left side member 53. The left side member 53 has a left steering axis supporting portion (not shown). The left turnable member is supported by the left side member 53 via the left steering axis supporting portion. This enables the left turnable member to turn relative to the left side member 53 about the left steering axis SL. That is, the left bracket 71 is coupled with the left side member 53 so as to turn relative to the left side member 53 about the left steering axis SL.

The left steering axis SL extends in the direction in which the left side member 53 extends. As shown in Fig. 3, the left steering axis SL extends parallel to the intermediate steering axis SI of the steering shaft 62 in the up-down direction of the body frame 21. As shown in Fig. 4, the left steering axis SL extends parallel to the intermediate steering axis SI of the steering shaft 62 in the front-rear direction of the body frame 21.

The left shock absorbing device 72 is a so-called telescopic shock absorbing mechanism. As shown in Fig. 3, the left shock absorbing device 72 includes an upper left telescopic element 721, a lower left telescopic element 722, and a left front wheel axle 723.

The upper left telescopic element 721 is supported on the left bracket 71. The lower left telescopic element 722 is coupled so as to be slidable relative to the upper left telescopic element 721. The lower left telescopic element 722 slides relative to the upper left telescopic element 721, whereby a displacement of the left front wheel 31 relative to the link mechanism 5 in the up-down direction of the body frame 21 is mitigated.

The left front wheel axle 723 is supported on the lower left telescopic element 722. The left front wheel axle 723 supports the left front wheel 31. The left front wheel 31 can rotate about the left front wheel axle 723.

As shown in Fig. 3, the leaning vehicle 1 includes a right suspension portion 8. The right suspension portion 8 includes a right bracket 81 and a right shock absorbing device 82.

The right bracket 81 includes a right turnable member (not shown) at an upper portion thereof. The right turnable member is disposed in an interior of the right side member 54 and extends in the same direction as the extending direction of the right side member 54. The right side member 54 has a right steering axis supporting portion (not shown). The right turnable member is supported on the right side member 54 via the right steering axis supporting portion. This enables the right turnable member to turn relative to the right side member 54 about the right steering axis SR. That is, the right bracket 81 is coupled with the right side member 54 so as to turn relative to the right side member 54 about the right steering axis SR.

The right steering axis SR extends in the direction in which the right side member 54 extends. As shown in Fig. 3, the right steering axis SR extends parallel to the intermediate steering axis SI of the steering shaft 62 in the up-down direction of the body frame 21. As shown in Fig. 4, the right steering axis SR extends parallel to the intermediate steering axis SI of the steering shaft 62 in the up-down direction of the body frame 21.

The right shock absorbing device 82 is a so-called telescopic shock absorbing mechanism. As shown in Fig. 3, the right shock absorbing device 82 includes an upper right telescopic element 821, a lower right telescopic element 822, and a right front wheel axle 823.

The upper right telescopic element 821 is supported on the right bracket 81. The lower right telescopic element 822 is coupled so as to be slidable relative to the upper right telescopic element 821. The lower right telescopic element 822 slides relative to the upper right telescopic element 821, whereby a displacement of the right front wheel 32 relative to the link mechanism 5 in the up-down direction of the body frame 21 is mitigated.

The right front wheel axle 823 is supported on the lower right telescopic element 822. The right front wheel axle 823 supports the right front wheel 32. The right front wheel 32 can rotate about the right front wheel axle 823.

As shown in Fig. 2, the left steering axis SL is inclined rearwards in the front-rear direction of the body frame 21 relative to a vertical direction (the up-down direction of the body frame 21). Similarly, the right steering axis SR is inclined rearwards in the front-rear direction of the body frame 21 relative to the vertical direction (the up-down direction of the body frame 21).

As shown in Fig. 4, the steering mechanism 6 includes a steering force transmission mechanism 63. The steering force transmission mechanism 63 includes an intermediate transmission plate 631, a left transmission plate 632, a right transmission plate 633, an intermediate joint 634, a left joint 635, a right joint 636, and a tie rod 637.

The intermediate transmission plate 631 is provided at a lower portion of the steering shaft 62. The intermediate transmission plate 631 can turn relative to the head pipe 211 about an axis that extends parallel to the intermediate steering axis SI of the steering shaft 62.

The left transmission plate 632 is disposed directly on the left of the intermediate transmission plate 631. The left transmission plate 632 is connected to a lower portion of the left bracket 71. The left transmission plate 632 cannot turn relative to the left bracket 71. The left transmission plate 632 can turn relative to the left side member 53 about the left steering axis SL.

The right transmission plate 633 is disposed directly on the right of the intermediate transmission plate 631 in the left-right direction of the body frame 21. The right transmission plate 633 is connected to a lower portion of the right bracket 81. The right transmission plate 633 cannot turn relative to the right bracket 81. The right transmission plate 633 can turn about the right steering axis SR relative to the right side member 54.

The intermediate joint 634 has an intermediate joint steering axis supporting portion 634a. The intermediate joint steering axis supporting portion 634a defines an intermediate joint steering axis that extends in the up-down direction of the body frame 21. The intermediate joint 634 is coupled to a front portion of the intermediate transmission plate 631 via the intermediate joint steering axis supporting portion 634a. This enables the intermediate joint 634 to turn relative to the intermediate transmission plate 631 about the intermediate joint steering axis.

The left joint 635 is disposed on the left of the intermediate joint 634 in the left-right direction of the body frame 21. The left joint 635 has a left joint steering axis supporting portion 635a. The left joint steering axis supporting portion 635a defines a left joint steering axis that extends in the up-down direction of the body frame 21. The left joint 635 is coupled to a front portion of the left transmission plate 632 via the left joint steering axis supporting portion 635a. This enables the left joint 635 to turn relative to the left transmission plate 632 about the left joint steering axis.

The right joint 636 is disposed on the right of the intermediate joint 634 in the left-right direction of the body frame 21. The right joint 636 has a right joint steering axis supporting portion 636a. The right joint steering axis supporting portion 636a defines a right joint steering axis that extends in the up-down direction of the body frame 21. The right joint 636 is coupled to a front portion of the right transmission plate 633 via the right joint steering axis supporting portion 636a. This enables the right joint 636 to turn relative to the right transmission plate 633 about the right joint steering axis.

The intermediate joint 634 has an intermediate joint leaning axis supporting portion 634b. The intermediate joint leaning axis supporting portion 634b defines an intermediate joint leaning axis that extends in the front-rear direction of the body frame 21. An intermediate portion of the tie rod 637 is coupled to the intermediate joint leaning axis supporting portion 634b. The intermediate portion of the tie rod 637 can turn relative to the intermediate joint leaning axis supporting portion 634b about the intermediate joint leaning axis.

The left joint 635 has a left joint leaning axis supporting portion 635b. The left joint leaning axis supporting portion 635b defines a left joint leaning axis that extends in the front-rear direction of the body frame 21. A left portion of the tie rod 637 is coupled to the left joint leaning axis supporting portion 635b. The left portion of the tie rod 637 can turn relative to the left joint leaning axis supporting portion 635b about the left joint leaning axis.

The right joint 636 has a right joint leaning axis supporting portion 636b. The right joint leaning axis supporting portion 636b defines a right joint leaning axis that extends in the front-rear direction of the body frame 21. A right portion of the tie rod 637 is coupled to the right joint leaning axis supporting portion 636b. The right portion of the tie rod 637 can turn relative to the right joint leaning axis supporting portion 636b about the right joint leaning axis.

The left transmission plate 632 is coupled to the intermediate transmission plate 631 via the left joint 635, the tie rod 637 and the intermediate joint 634. The right transmission plate 633 is coupled to the intermediate transmission plate 631 via the right joint 636, the tie rod 637 and the intermediate joint 634. The left transmission plate 632 and the right transmission plate 633 are coupled to each other via the left joint 635, the tie rod 637 and the right joint 636. In other words, the tie rod 637 couples the intermediate transmission plate 631 to the left transmission plate 632 and the right transmission plate 633.

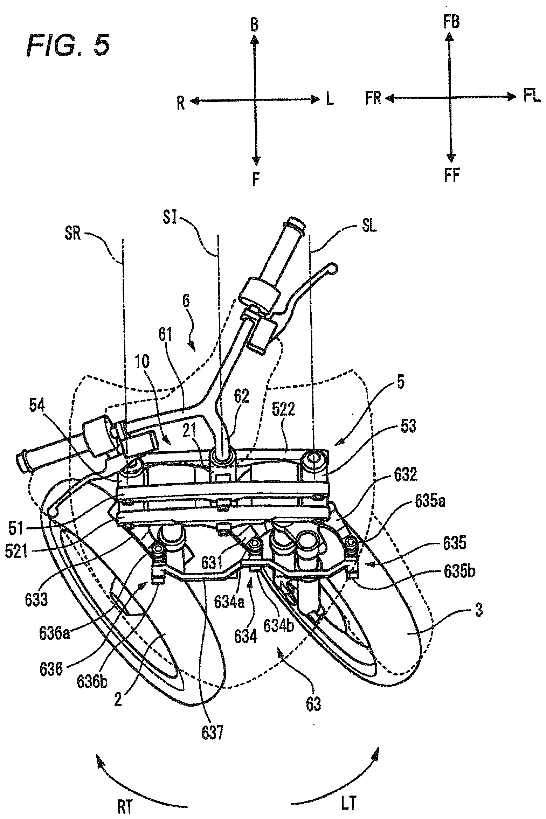

Next, referring to Fig. 5, a steering operation of the leaning vehicle 1 will be described. Fig. 5 is a plan view of the front portion of the leaning vehicle 1 as viewed from above in the up-down direction of the body frame 21 with the left front wheel 31 and the right front wheel 32 turned to the left. In Fig. 5, the body frame 21 stands upright. The following description, which will be made while referring to Fig. 5, is based on the understanding that the body frame 21 stands upright. In Fig. 5, most of those indicated by solid lines are seen through the front cover 221, and the two front fenders 222.

When the rider operates the handlebar 61, the steering shaft 62 turns about the intermediate steering axis SI relative to the head pipe 211. In the case where the front wheels are turned to the left as shown in Fig. 5, the steering shaft 62 turns in a direction indicated by an arrow LT. The intermediate transmission plate 631 turns in the direction indicated by the arrow LT about the intermediate steering axis SI relative to the head pipe 211.

The intermediate joint 634 of the tie rod 637 turns in a direction indicated by an arrow RT relative to the intermediate transmission plate 631 in association with the turning of the intermediate transmission plate 631 in the direction indicated by the arrow LT. This causes the tie rod 637 to move to the left in the left-right direction of the body frame 21 and to the rear in the front-rear direction of the body frame 21 while maintaining its posture.

In association with the movement of the tie rod 637, the left joint 635 and the right joint 636 of the tie rod 637 turn in the direction of an arrow RT relative to the left transmission plate 632 and the right transmission plate 633, respectively. This causes the left transmission plate 632 and the right transmission plate 633 to turn in the direction indicated by an arrow LT with the tie rod 637 maintaining its posture.

When the left transmission plate 632 turns in the direction indicated by the arrow LT, the left bracket 71, which is not allowed to turn relative to the left transmission plate 632, turns in the direction indicated by the arrow LT about the left steering axis SL relative to the left side member 53.

When the right transmission plate 633 turns in the direction indicated by the arrow LT, the right bracket 81, which is not allowed to turn relative to the right transmission plate 633, turns in the direction indicated by the arrow LT about the right steering axis SR relative to the right side member 54.

When the left bracket 71 turns in the direction indicated by the arrow LT, the left shock absorbing device 72, which is supported on the left bracket 71, turns in the direction indicated by the arrow LT about the left steering axis SL relative to the left side member 53. When the left shock absorbing device 72 turns in the direction indicated by the arrow LT, the left front wheel 31, which is supported on the left shock absorbing device 72 via the left front axle 723, turns in the direction indicated by the arrow LT about the left steering axis SL relative to the left side member 53. As this occurs, the left front fender also turns in the direction indicated by the arrow LT together with the left front wheel 31.

When the right bracket 81 turns in the direction indicated by the arrow LT, the right shock absorbing device 82, which is supported on the right bracket 81, turns in the direction indicated by the arrow LT about the right steering axis SR relative to the right side member 54. When the right shock absorbing device 82 turns in the direction indicated by the arrow LT, the right front wheel 32, which is supported on the right shock absorbing device 82 via the right front wheel axle 823, turns in the direction indicated by the arrow LT about the right steering axis SR relative to the right side member 54. As this occurs, the right front fender also turns in the direction indicated by the arrow LT together with the right front wheel 32.

When the rider operates the handlebar 61 so as to turn the left and right front wheels to the right, the elements described above turn in an opposite direction to the direction in which they turn when the left and right front wheels are turned to the left. Since the elements only move the other way around in relation to the left-right direction, the detailed description thereof will be omitted here.

That is, the steering force transmission mechanism 63 turns the left suspension portion 7 and the right suspension portion 8 in the directions in which the handlebar 61 is turned from its neutral position. This causes the left front wheel 31 and the right front wheel 32 to turn about the left steering axis SL and the right steering axis SR, respectively, in the same direction as the direction in which the handlebar 61 is turned.

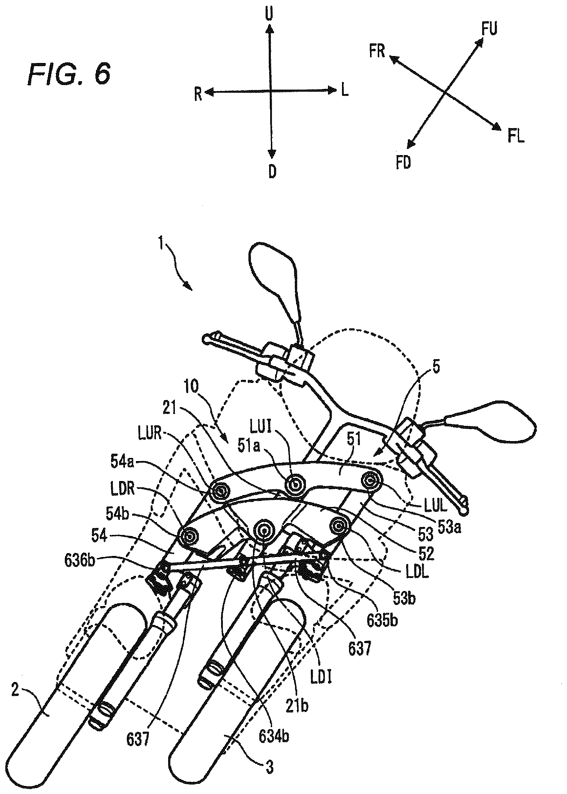

Next, referring to Figs. 3 and 6, a leaning operation of the leaning vehicle 1 will be described. Fig. 6 is a front view of the front portion of the leaning vehicle 1 as seen from the front in the front-rear direction of the body frame 21, with the body frame 21 caused to lean to the left of the leaning vehicle 1. In Fig. 6, most of those indicted by solid lines are seen through the front cover 221, the two front fenders 222, and the leg shield 224 which are indicated by dashed lines.

As shown in Fig. 3 when seeing the leaning vehicle 1 from the front of the body frame 21 standing upright, the link mechanism 5 has a rectangular shape. As shown in Fig. 6, when the leaning vehicle 1 is seen from the front of the body frame 21 which is now inclined or is leaning, the link mechanism 5 has a parallelogram shape. The operation of the link mechanism 5 is interlocked with the leaning of the body frame 21 in the left-right direction thereof. The "operation of the link mechanism 5" means a change in the shape of the link mechanism 5 as a result of the upper cross member 51 and the lower cross member 52 turning relative to the head pipe 211 about the upper intermediate leaning axis LUI and the lower intermediate leaning axis LDI, respectively, and the upper cross member 51, the lower cross member 52, the left side member 53 and the right side member 54 turning relatively about the upper left leaning axis LUL, the upper right leaning axis LUR, the lower left leaning axis LDL and the lower right leaning axis LDR, respectively.

For example, as shown in Fig. 6, when the rider causes the leaning vehicle 1 to lean to the left, the head pipe 211 leans to the left with respect to the vertical direction. When the head pipe 211 leans, the upper cross member 51 turns counterclockwise relative to the head pipe 211 about the upper intermediate leaning axis LUI that passes through the upper intermediate leaning axis supporting portion 211a when seeing the leaning vehicle 1 from the front thereof. Similarly, the lower cross member 52 turns counterclockwise relative to the head pipe 211 about the lower intermediate leaning axis LDI that passes through the lower intermediate leaning axis supporting portion 211b when seeing the leaning vehicle 1 from the front thereof. This causes the upper cross member 51 to move to the left in the left-right direction of the body frame 21 relative to the lower cross member 52.

As a result of the upper cross member 51 moving in the way described above, the upper cross member 51 turns counterclockwise about the upper left leaning axis LUL that passes the upper left leaning axis supporting portion 53a and the upper right leaning axis LUR that passes through the upper right leaning axis supporting portion 54a relative to the left side member 53 and the right side member 54, when seeing the leaning vehicle 1 from the front thereof. Similarly, the lower cross member 52 turns counterclockwise about the lower left leaning axis LDL that passes through the lower left leaning axis supporting portion 53b and the lower right leaning axis LDR that passes through the lower right leaning axis supporting portion 54b relative to the left side member 53 and the right side member 54, when seeing the leaning vehicle 1 from the front thereof. This causes the left side member 53 and the right side member 54 to lean to the left of the leaning vehicle 1 with respect to the vertical direction.

As this occurs, the lower cross member 52 moves to the left in the left-right direction of the body frame 21 relative to the tie rod 637. As a result of the lower cross member 52 moving as described above, the tie rod 637 turns relative to the intermediate joint 634, the left joint 635, and the right joint 636 about the intermediate joint leaning axis supporting portion 634b, the left joint leaning axis supporting portion 635b, and the right joint leaning axis supporting portion 636b, respectively. This causes the tie rod 637 to keep its posture parallel to the upper cross member 51 and the lower cross member 52.

The left bracket 71, which is supported on the left side member 53 via the left turnable member, leans to the left of the leaning vehicle 1 as the left side member 53 leans to the left of the leaning vehicle 1. In association with the leftward leaning of the left bracket 71, the left shock absorbing device 72, which is supported on the left bracket 71, also leans to the left of the leaning vehicle 1. This causes the left front wheel 31, which is supported on the left shock absorbing device 72, to lean to the left of the leaning vehicle 1.

The right bracket 81, which is supported on the right side member 54 via the right tuning member, leans to the left of the leaning vehicle 1 as the right side member 54 leans to the left of the leaning vehicle 1. In association with the leftward leaning of the right bracket 81, the right shock absorbing device 82, which is supported on the right bracket 81, also leans to the left of the leaning vehicle 1. This causes the right front wheel 32, which is supported on the right shock absorbing device 82, to lean to the left of the leaning vehicle 1.

The leaning operations of the left front wheel 31 and the right front wheel 32 are described based on the vertical direction. However, when the leaning vehicle 1 leans (when the link mechanism 5 is activated to operate), the up-down direction of the body frame 21 does not coincide with the vertical up-down direction. In a case where the up-down direction of the body frame 21 is set as the reference, when the link mechanism 5 is activated to operate, the left front wheel 31 and the right front wheel 32 change their relative position in the up-down direction of the body frame 21. In other words, the link mechanism 5 changes the relative position of the left front wheel 31 and the right front wheel 32 in the up-down direction of the body frame 21 to thereby cause the body frame 21 to lean to the left or right of the leaning vehicle 1 from the vertical direction. This causes the leaning vehicle 1 to turn to the left.

When the rider causes the leaning vehicle 1 to lean to the right, the aforesaid elements lean to the right. This causes the leaning vehicle 1 to turn to the right. Since the elements only move the other way around in relation to the left-right direction, the detailed description thereof will be omitted here.

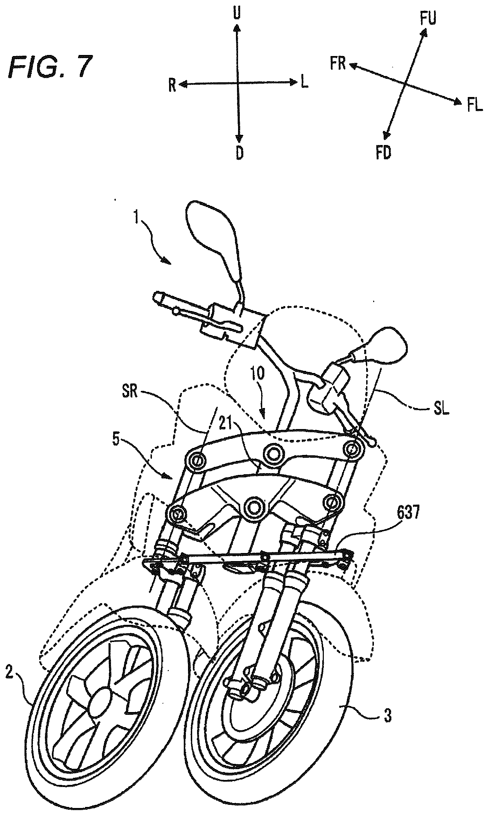

Fig. 7 is a front view of the front portion of the leaning vehicle 1 when seeing the leaning vehicle from the front thereof in the front-rear direction of the body frame 21 with the leaning vehicle 1 caused to lean to the left and the front wheels turned to the left. In Fig. 7, most of those indicated by solid lines are seen through the front cover 221, and the two front fenders 222.

When the front wheels are turned, the left front wheel 31 is turned counterclockwise about the left steering axis SL, while the right front wheel 32 is turned counterclockwise about the right steering axis SR. When the rider causes the leaning vehicle 1 to lean, the left front wheel 31 and the right front wheel 32 lean to the left of the leaning vehicle 1 together with the body frame 21. That is, in this state, the link mechanism 5 exhibits the shape of a parallelogram. The tie rod 637 moves to the left in the left-right direction of the body frame 21 and to the rear in the front-rear direction of the body frame 21 from the position where the body frame 21 stands upright.

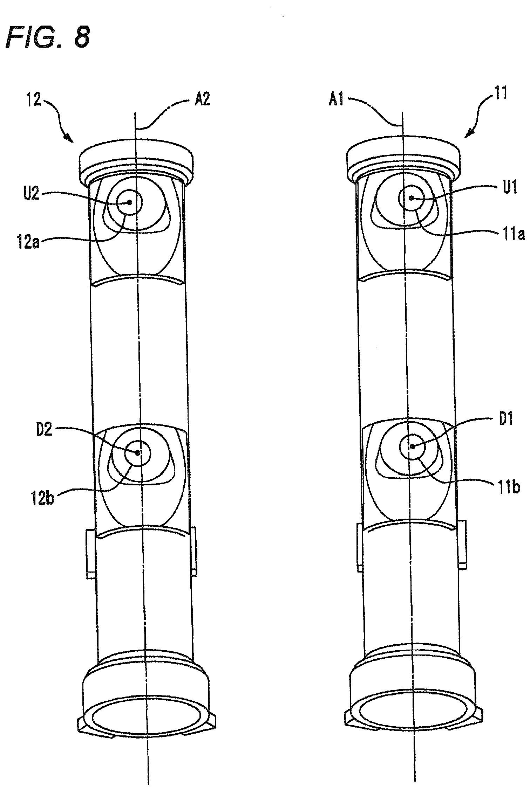

Fig. 8 shows external appearances of a first side member 11 and a second side member 12 that are to be mounted on the leaning vehicle 1. The leaning vehicle 1 is configured to be able to selectively take either of a first state and a second state. In the first state, the first side member 11 is used as the left side member 53, and the second side member 12 is used as the right side member 54. In the second state, the first side member 11 is used as the right side member54, and the second side member12 is used as the left side member 53. That is, either of the first state and the second state is selectively taken by exchanging the positions of the first side member 11 and the second side member 12.

The first side member 11 is a tubular member having a first center axis A1. The first side member 11 includes a first upper axis supporting portion 11a and a first lower axis supporting portion 11b. The first upper axis supporting portion 11a and the first lower axis supporting portion 11b are both formed as an axial hole.

The first upper axis supporting portion 11a defines a first upper axis U1. When seeing the first side member 11 from a direction along the first upper axis U1, the first upper axis supporting portion 11a is formed so that the first upper axis U1 is offset to the right of the first center axis A1 as seen in Fig. 8. The first lower axis supporting portion 11b defines a first lower axis D1. When seeing the first side member 11 from a direction along the first lower axis D1, the first lower support portion 11b is formed so that the first lower axis D1 is offset to the right of the first center axis A1 as seen in Fig. 8.

The second side member 12 is a tubular member having a second center axis A2. The second side member 12 includes a second upper axis supporting portion 12a and a second lower axis supporting portion 12b. The second upper axis supporting portion 12a and the second lower axis supporting portion 12b are both formed as an axial hole.

The second upper axis supporting portion 12a defines a second upper axis U2. When seeing the second side member 12 from a direction along the second upper axis U2, the second upper support portion 12a is formed so that the second upper axis U2 is offset to the left of the second center axis A2 as seen in Fig. 8. The second lower axis supporting portion 12b defines a second lower axis D2. When seeing the second side member 12 from a direction along the second lower axis D2, the second lower support portion 12b is formed so that the second lower axis D2 is offset to the left of the second center axis A2 as seen in Fig. 8.

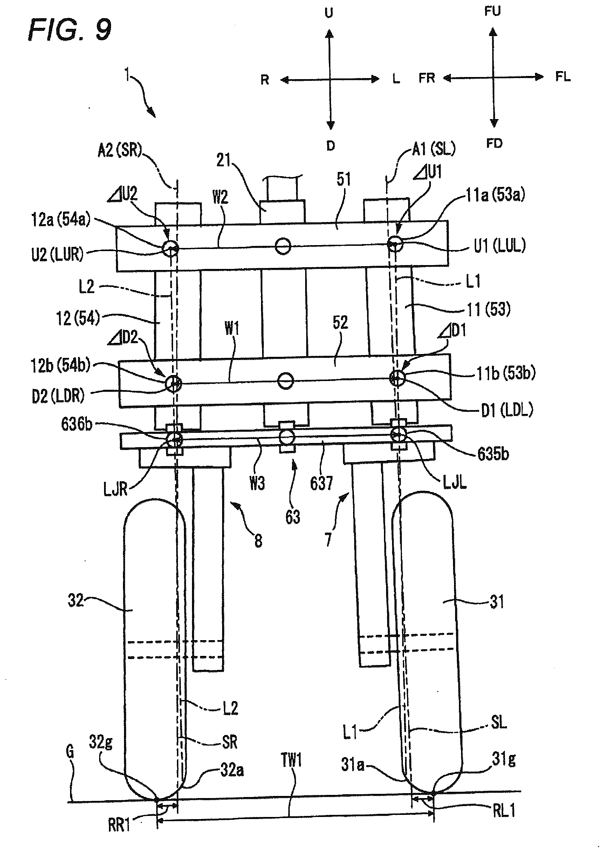

Fig. 9 shows a configuration of the leaning vehicle 1 schematically when the first state is selected. The dimensions of the constituent elements and the positional relationships of the constituent elements are appropriately changed to give priority to visibility. As described above, in the leaning vehicle 1 that selects the first state, the first side member 11 is used as the left side member 53, and the second side member 12 is used as the right side member 54.

Specifically, the first side member 11 is disposed so that the first center axis A1 of the first side member 11 coincides with the left steering axis SL. That is, the left steering axis SL extends so as to pass through the first side member 11. The left steering axis SL is an example of the left steering axis.

An axial body provided at a left portion of the upper cross member 51 is joined to the first upper axis supporting portion 11a so as to be turnable about the first upper axis U1. This enables the left portion of the upper cross member 51 to be coupled with the first side member 11. The first upper axis supporting portion 11a serves as the upper left leaning axis supporting portion 53a shown in Fig. 2. The first upper turning axis U1 coincides with the upper left leaning turning axis LUL shown in Fig. 2. The first upper axis supporting portion 11a in the first state is an example of the upper left axis supporting portion. The first upper axis U1 in the first state is an example of the upper left axis.

An axial body provided at a left portion of the lower cross member 52 is joined to the first lower axis supporting portion 11b so as to be turnable about the first lower axis D1. This enables the left portion of the lower cross member 52 to be coupled with the first side member 11. The first lower axis supporting portion 11b serves as the lower left leaning axis supporting portion 53b shown in Fig. 2. The first lower axis D1 coincides with the lower left leaning axis LDL shown in Fig. 2. The first lower axis supporting portion 11b in the first state is an example of the lower left axis supporting portion. The first lower axis D1 in the first state is an example of the lower left axis.

The first upper axis U1 and the first lower axis D1 are offset to the left from the left steering axis SL when seen from the front-rear direction of the body frame 21.

A first straight line L1 that connects the first upper axis U1 and the first lower axis D1 overlaps a ground contact surface 31a of the left front wheel 31 when seen from the front-rear direction of the body frame 21. The ground contact surface 31a is a surface that is curved with respect to a direction parallel to the left front wheel axle 723 of the left front wheel 31. The first straight line L1 in the first state is an example of the left straight line.

On the other hand, the second side member 12 is disposed so that the second center axis A2 of the second side member 12 coincides with the right steering axis SR. That is, the right steering axis SR extends so as to pass through the second side member 12. The right steering axis SR is an example of the right steering axis.

An axial body provided at a right portion of the upper cross member 51 is joined to the second upper axis supporting portion 12a so as to be turnable about the second upper axis U2. This enables the right portion of the upper cross member 51 to be coupled with the second side member 12. The second upper axis supporting portion 12a serves as the upper right leaning axis supporting portion 54a shown in Fig. 2. The second upper axis U2 coincides with the upper right leaning axis LUR shown in Fig. 2. The second upper axis supporting portion 12a in the first state is an example of the upper right axis supporting portion. The second upper axis U2 in the first state is an example of the upper right axis.

An axial body provided at a right portion of the lower cross member 52 is joined to the second lower axis supporting portion 12b so as to be turnable about the second lower axis D2. This enables the right portion of the lower cross member 52 to be coupled with the second side member 12. The second lower axis supporting portion 12b serves as the lower right leaning axis supporting portion 54b shown in Fig. 2. The second lower axis D2 coincides with the lower right leaning axis LDR shown in Fig. 2. The second lower axis supporting portion 12b in the first state is an example of the lower right axis supporting portion. The second lower axis D2 in the first state is an example of the lower right axis.

The second upper axis U2 and the second lower axis D2 are offset to the right from the right steering axis SR when seen from the front-rear direction of the body frame 21.

A second straight line L2 that connects the second upper axis U2 and the second lower axis D2 overlaps a ground contact surface 32a of the right front wheel 32 when seen from the front-rear direction of the body frame 21. The ground contact surface 32a is a surface that is curved with respect to a direction parallel to the right front wheel axle 823 of the right front wheel 32. The second straight line L2 in the first state is an example of the right straight line.

As described by reference to Fig. 8, an offset amount ΔU1 of the first upper axis U1 to the left is equal to an offset amount ΔU2 of the second upper axis U2 to the right. An offset amount ΔD1 of the first lower axis D1 to the left is equal to an offset amount ΔD2 of the second lower axis D2 to the right.

A tread width TW1 of the leaning vehicle 1 in the first state is defined as a distance between a ground contact point 31g of the left front wheel 31 and a ground contact point 32g of the right front wheel 32. The tread width TW1 is, for example, 470.6 mm.

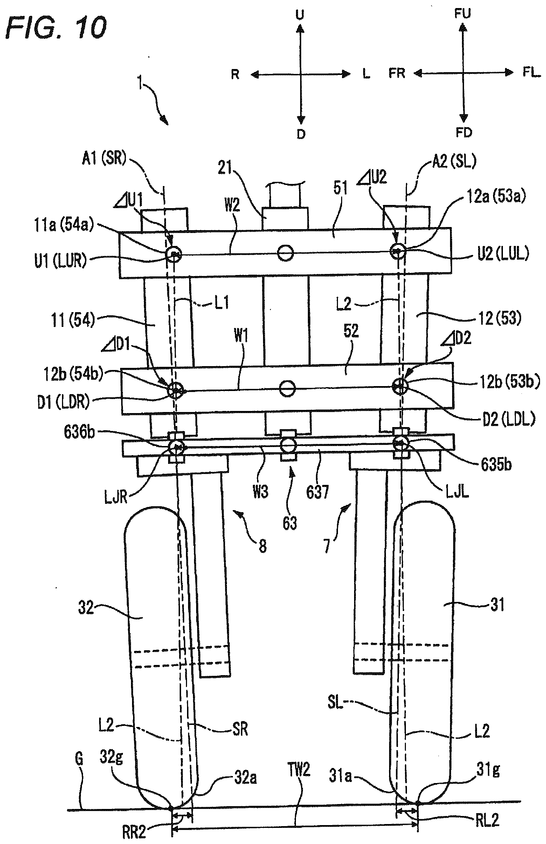

Fig. 10 shows a configuration of the leaning vehicle 1 schematically when the second state is selected. The dimensions of the constituent elements and the positional relationships of the constituent elements are appropriately changed to give priority to visibility. As described before, in the leaning vehicle 1 that takes the second state, the first side member 11 is used as the right side member 54, and the second side member 12 is used as the left side member 53.

Specifically, the first side member 11 is disposed so that the first center axis A1 of the first side member 11 coincides with the right steering axis SR. That is, the right steering axis SR extends so as to pass through the first side member 11. The right steering axis SR is an example of the right steering axis.

An axial body provided at a right portion of the upper cross member 51 is joined to the first upper axis supporting portion 11a so as to be turnable about the first upper axis U1. This enables the right portion of the upper cross member 51 to be coupled with the first side member 11. The first upper axis supporting portion 11a serves as the upper right leaning axis supporting portion 54a shown in Fig. 2. The first upper axis U1 coincides with the upper right leaning axis LUR. The first upper axis supporting portion 11a in the second state is an example of the upper right axis supporting portion. The first upper axis U1 in the second state is an example of the upper right axis.

An axial body provided at a right portion of the lower cross member 52 is joined to the first lower axis supporting portion 11b so as to be turnable about the first lower axis D1. This enables the right portion of the lower cross member 52 to be coupled with the first side member 11. The first lower axis supporting portion 11b serves as the lower right leaning axis supporting portion 54b. The first lower axis D1 coincides with the lower right leaning axis LDR. The first lower axis supporting portion 11b in the second state is an example of the lower right axis supporting portion. The first lower axis D1 in the second state is an example of the lower right axis.

The first upper axis U1 and the first lower axis D1 are offset to the left from the right steering axis SR when seen from the front-rear direction of the body frame 21.

The first straight line L1 that connects the first upper axis U1 and the first lower axis D1 overlaps the ground contact surface 32a of the right front wheel 32 when seen from the front-rear direction of the body frame 21. The first straight line L1 in the second state is an example of the right straight line.

On the other hand, the second side member 12 is disposed so that the second center axis A2 of the second side member 12 coincides with the left steering axis SL. That is, the left steering axis SL extends so as to pass through the second side member 12. The left steering axis SL is an example of the left steering axis.

An axial body provided at the left portion of the upper cross member 51 is joined to the second upper axis supporting portion 12a so as to be turnable about the second upper axis U2. This enables the left portion of the upper cross member 51 to be coupled with the second side member 12. The second upper axis supporting portion 12a serves as the upper left leaning axis supporting portion 53a. The second upper axis U2 coincides with the upper left leaning axis LUL. The second upper axis supporting portion 12a in the second state is an example of the upper left axis supporting portion. The second upper axis U2 in the second state is an example of the upper left axis.

An axial body provided at the left portion of the lower cross member 52 is joined to the second lower axis supporting portion 12b so as to be turnable about the second lower axis D2. This enables the left portion of the lower cross member 52 to be coupled with the second side member 12. The second lower axis supporting portion 12b serves as the lower left leaning axis supporting portion 53b. The second lower axis D2 coincides with the lower left leaning axis LDL. The second lower axis supporting portion 12b in the second state is an example of the lower left axis supporting portion. The second lower axis D2 in the second state is an example of the lower left axis.

The second upper axis U2 and the second lower axis D2 are offset to the right from the left steering axis SL when seen from the front-rear direction of the body frame 21.

The second straight line L2 that connects the second upper axis U2 and the second lower axis D2 overlaps the ground contact surface 31a of the left front wheel 31 when seen from the front-rear direction of the body frame 21. The second straight line L2 in the second state is an example of the left straight line.

As described by reference to Fig. 8, an offset amount ΔU1 of the first upper axis U1 to the left is equal to an offset amount ΔU2 of the second upper axis U2 to the right. An offset amount ΔD1 of the first lower axis D1 to the left is equal to an offset amount ΔD2 of the second lower axis D2 to the right.

A tread width TW2 of the leaning vehicle 1 in the second state is also defined as a distance between the ground contact point 31g of the left front wheel 31 and the ground contact point 32g of the right front wheel 32. The tread width TW2 is, for example, 439.4 mm.

According to the configuration described above, by disposing the first side member 11 configured to serve as the left side member 53 in the first state in the position where the second side member 12 in the first state is disposed, it is possible to cause the first side member 11 to serve as the right side member 54 in the second state. As this occurs, the inclining direction of the right straight line L1 relative to the right steering axis SR in the second state becomes opposite to the inclining direction of the right straight line L2 relative to the right steering axis SR in the first state. Similarly, by disposing the second side member 12 configured to serve as the right side member 54 in the first state in the position where the first side member 11 in the first state is disposed, it is possible to cause the second side member 12 to serve as the left side member 53 in the second state. As this occurs, the inclining direction of the left straight line L2 relative to the left steering axis SL in the second state becomes opposite to the inclining direction of the left straight line L1 relative to the left steering axis SL in the first state. Consequently, the tread width changes between the first state and the second state. That is, the first state and the second state can be switched over by exchanging the first side member 11 with the second side member 12 in position. Consequently, the tread width of the leaning vehicle 1 can be changed by the method different from the conventional concept in which an extra part such as an adaptor is used.

As shown in Figs. 9 and 10, in both of the first state and the second state, the straight line that connects the upper left leaning axis LUL and the lower left leaning axis LDL overlaps the ground contact surface 31a of the left front wheel 31 when seen from the front-rear direction of the body frame 21. Similarly, in both of the first state and the second state, the straight line that connects the upper right leaning axis LUR and the lower right leaning axis LDR overlaps the ground contact surface 32a of the second front wheel 32 when seen from the front-rear direction of the body frame 21. This can suppress the influence to be imposed on the steering property of the leaning vehicle 1 by the switching between the first state and the second state.

In this embodiment, when the first state is selected, both the first upper axis U1 and the first lower axis D1 of the first side member 11 are offset to the left in the left-right direction of the body frame 21 from the left steering axis SL when seen from the front-rear direction of the body frame 21. On the other hand, both the second upper axis U2 and the second lower axis D2 of the second side member 12 are offset to the right in the left-right direction of the body frame 21 from the right steering axis SR when seen from the front-rear direction of the body frame 21.

In this embodiment, when the second state is selected, both the first upper axis U1 and the first lower axis D1 of the first side member 11 are offset to the left in the left-right direction of the body frame 21 from the right steering axis SR when seen from the front-rear direction of the body frame 21. On the other hand, both the second upper axis U2 and the second lower axis D2 of the second side member 12 are offset to the right in the left-right direction of the body frame 21 from the left steering axis SL when seen from the front-rear direction of the body frame 21.

According to this configuration, it is possible to easily reduce the inclination of the straight line that connects the upper left leaning axis LUL and the lower left leaning axis LDL relative to the left steering axis SL and the inclination of the straight line that connects the upper right leaning axis LUR and the lower right leaning axis LDR relative to the right steering axis SR. Consequently, although the first state and the second state can be switched over to change the tread width, it is possible to suppress the influence to be imposed on the steering property by the switching.

As shown in Figs. 9 and 10, an offset amount ΔU1 of the first upper axis U1 from the first center axis A1 differs from an offset amount ΔD1 of the first lower axis D1 from the first center axis A1. Similarly, an offset amount ΔU2 of the second upper axis U2 from the second center axis A2 differs from an offset amount ΔD2 of the second lower axis D2 from the second center axis A2.

According to this configuration, the inclination of the straight line that connects the upper left leaning axis LUL and the lower left leaning axis LDL relative to the left steering axis and the inclination of the straight line that connects the upper right leaning axis LUR and the lower right leaning axis LDR relative to the right steering axis SR can be adjusted easily. Consequently, although it is enabled to switch over the first state and the second state to change the tread width, it is possible to facilitate the design for suppressing the influence to be imposed on the steering property by the switching.

As shown in Figs. 9 and 10, in both of the first state and the second state, a distance W1 between the lower left leaning axis LDL at the lower left leaning axis supporting portion 53b and the lower right leaning axis LDR at the lower right leaning axis supporting portion 54b is equal to a distance W2 between the upper left leaning axis LUL at the upper left leaning axis supporting portion 53a and the upper right leaning axis LUR at the upper right leaning axis supporting portion 54a.

According to this configuration, it is possible to suppress a change in inertial moment of the leaning vehicle 1 occurring in association with the switching between the first state and the second state. Consequently, it is possible to suppress a change in operational feeling of the leaning vehicle 1 in association with the switching between the first state and the second state.

As described with reference to Fig. 4, the tie rod 637 transmits the turning force of the handlebar 61 to the left suspension portion 7 and the right suspension portion 8. The handlebar 61 is an example of the steering member. The tie rod 637 is an example of the transmission member.

As shown in Figs. 9 and 10, the steering force transmission mechanism 63 includes a left joint leaning axis supporting portion 635b. The left joint leaning axis supporting portion 635b defines a left joint leaning axis LJL that extends in the front-rear direction of the body frame 21. A left portion of the tie rod 637 can turn relative to the left joint leaning axis supporting portion 635b about the left joint leaning axis LJL. The left portion of the tie rod 637 is coupled to the left suspension portion 7 via the left transmission plate 632. The left joint leaning axis supporting portion 635b is an example of the left axis supporting portion. The left joint leaning axis LJL is an example of the left leaning axis.

As shown in Figs. 9 and 10, the steering force transmission mechanism 63 includes a right joint leaning axis supporting portion 636b. The right joint leaning axis supporting portion 636b defines a right joint leaning axis LJR that extends in the front-rear direction of the body frame 21. A right portion of the tie rod 637 can turn relative to the right joint leaning axis supporting portion 636b about the right joint leaning axis LJR. The right portion of the tie rod 637 is coupled to the right suspension portion 8 via the right transmission plate 633. The right joint leaning axis supporting portion 636b is an example of the right axis supporting portion. The right joint leaning axis LJR is an example of the right leaning axis.

As shown in Figs. 9 and 10, in both of the first state and the second state, the straight line that connects the upper left leaning axis LUL and the lower left leaning axis LDL intersects the left joint leaning axis supporting portion 635b when seen from the front-rear direction of the body frame 21. Similarly, in both of the first state and the second state, the straight line that connects the upper right leaning axis LUR and the lower right leaning axis LDR intersects the right joint leaning axis supporting portion 636b when seen from the front-rear direction of the body frame 21.

Even with this configuration, it is possible to suppress a change in inertial moment of the leaning vehicle 1 occurring in association with the switching between the first state and the second state. Consequently, it is possible to suppress a change in operational feeling of the leaning vehicle 1 in association with the switching between the first state and the second state.

As shown in Figs. 9 and 10, in both of the first state and the second state, a distance W3 between the left joint leaning axis LJL at the left joint leaning axis supporting portion 635b and the right joint leaning axis LJR at the right joint leaning axis supporting portion 636b is equal to the distance W2 between the upper left leaning axis LUL at the upper left leaning axis supporting portion 53a and the upper right leaning axis LUR at the upper right leaning axis supporting portion 54a.

A scrub radius RL1 of the left front tire 31 in the first state shown in Fig. 9 is the same as a scrub radius RL2 of the left front wheel 31 in the second state shown in Fig. 10. The scrub radius of the left front wheel 31 can be defined as a distance from a point of intersection between the left steering axis SL and the ground G to a center of the ground contact surface 31a in the left-right direction of the body frame 21.

Similarly, a scrub radius RR1 of the right front wheel 32 in the first state shown in Fig. 9 is the same as a scrub radius RR2 of the right front wheel 32 in the second state shown in Fig. 10. The scrub radius of the right front wheel 32 can be defined as a distance from a point of intersection between the right steering axis SR and the ground G to a center of the ground contact surface 32a in the left-right direction of the body frame 21.

According to this configuration, it is possible to suppress a change in steering resistance of the left front wheel 31 and the right front wheel 32 occurring in association with the switching between the first state and the second state. Consequently, it is possible to suppress a change in operational feeling of the leaning vehicle 1 in association with the switching between the first state and the second state.

As shown in Figs. 3 and 4, the upper left leaning axis LUL, the lower left leaning axis LDL, the upper right leaning axis LUR and the lower right leaning axis LDR extend parallel to one another. With the body frame 21 standing upright and the handlebar 61 staying at its neutral position (non-steered state), as shown in Fig. 2, when seeing the leaning vehicle 1 from the left-right direction of the body frame 21, a straight line connecting the ground contact point 31g of the left front wheel 31 and a ground contact point 4g of the rear wheel 4 extends parallel to the upper left leaning axis LUL and the lower left leaning axis LDL. Consequently, the straight line extends parallel to the upper left leaning axis LUL, the lower left leaning axis LDL, the upper right leaning axis LUR, and the lower right leaning axis LDR. This relationship can also be established for a straight line connecting the ground contact point 32g of the right front wheel 32 and the ground contact point 4g of the rear wheel 4.

According to this configuration, the contact loads of the left front wheel 31 and the right front wheel 32 against the road surface tend to be uniform. Consequently, the service life of tires on the left front wheel 31 and the right front wheel 32 can be expected to be extended.

The embodiment described heretofore is intended to facilitate the understanding of the invention and is not intended to limit the concepts of the invention. The embodiment that has been described heretofore can be modified or improved without departing from the fundamental concept of the invention.

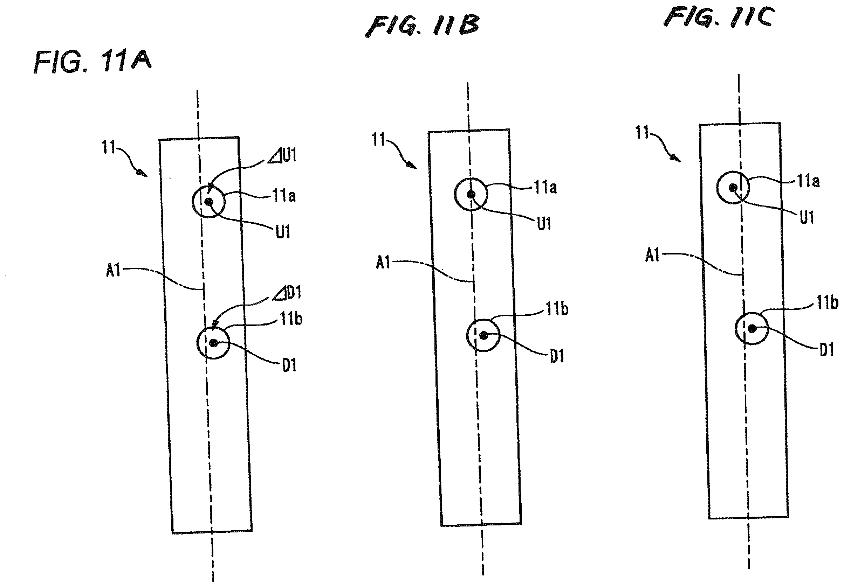

In the embodiment that has been described heretofore, in the first side member 11, the offset amount ΔU1 of the first upper axis U1 from the first center axis A1 of the first side member differs from the offset amount ΔD1 of the first lower axis D1 from the first center axis A1. However, as shown in Fig. 11A, in the first side member 11, the offset amount ΔU1 of the first upper axis U1 from the first center axis A1 of the first side member may be equal to the offset amount ΔD1 of the first lower axis D1 from the first center axis A1. Similarly, in the second side member 12, the offset amount ΔU2 of the second upper axis U2 from the second center axis A2 may be equal to the offset amount ΔD2 of the second lower axis D2 from the second center axis A2.

In the embodiment described heretofore, both the first upper axis U1 and the first lower axis D1 of the first side member 11 are offset from the first center axis A1. As shown in Fig. 11B, however, a configuration can be adopted in which either the first upper axis U1 or the first lower axis D1 is offset from the first center axis A1. This will also be true with the second upper axis U2 and the second lower axis D2 of the second side member 12.

In the embodiment described above, both the first upper axis U1 and the first lower axis D1 of the first side member 11 are offset in the same direction from the first center axis A1. As shown in Fig. 11C, however, a configuration may also be adopted in which the first upper axis U1 and the first lower axis D1 are offset in an opposite direction from the first center axis A1. This will also be true with the second upper axis U2 and the second lower axis D2 of the second side member 12.

In the embodiment described heretofore, the first upper axis supporting portion 11a of the first side member 11 is formed as the axial hole configured to receive the axial body provided on the upper cross member 51. However, the first upper axis supporting portion 11a can be formed as an axial body configured to be received in an axial hole formed in the upper cross member 51.

In the embodiment described above, the first lower axis supporting portion 11b of the first side member 11 is formed as the axial hole configured to receive the axial body provided on the lower cross member 52. However, the first lower axis supporting portion 11b can be formed as an axial body configured to be received in an axial hole formed in the lower cross member 52.

In the embodiment described heretofore, the second upper axis supporting portion 12a of the second side member 12 is formed as the axial hole configured to receive the axial body provided on the upper cross member 51. However, the second upper axis supporting portion 12a can be formed as an axial body configured to be received in an axial hole formed in the upper cross member 51.

In the embodiment described above, the second lower axis supporting portion 12b of the second side member 12 is formed as the axial hole configured to receive the axial body provided on the lower cross member 52. However, the second lower axis supporting portion 12b can be formed as an axial body configured to be received in an axial hole formed in the lower cross member 52.

In the embodiment described above, the leaning vehicle 1 comprises the single rear wheel 4. However, the leaning vehicle 1 may comprise a plurality of rear wheels.

In the embodiment described above, the handlebar 61 is made up of the single member that extends in the left-right direction of the body frame. However, the handlebar 61 may be made up of individual members including a left handlebar portion configured to be operated by the left hand of the rider and a right handlebar portion configured to be operated by the right hand of the rider, provided that steering force to turn the left front wheel 31 and the right front wheel 32 can be inputted through the handlebar 61. Alternatively, the handlebar 61 may be formed in a shape of a steering wheel or a control stick.

A configuration may be adopted in which the link mechanism 5 comprises a cross member other than the upper cross member 51 and the lower cross member 52. The "upper cross member" and the "lower cross member" are merely so called based on their relative positional relationship in the up-down direction. The "upper cross member" is not intended to imply an uppermost cross member in the link mechanism 5. The "upper cross member" implies a cross member which lies above another cross member. The "lower cross member" is not intended to imply a lowermost cross member in the link mechanism 5. The "lower cross member" implies a cross member which lies below another cross member.

The terms and expressions that are used in this description are used to describe the embodiment of the disclosed concept and hence should not be construed as limiting the scope of the invention. It should be understood that any equivalents to the characteristic matters that are shown and described in this description should not be excluded and that various modifications made within the scope of claims to be made later are permitted.

When used in this description, the expression "so as not to be movable relative to the body frame 21" means that a certain part or member is caused to lean in the left-right direction of the leaning vehicle 1 together with the body frame 21 when the body frame 21 is caused to lean in the left-right direction of the leaning vehicle 1. When used in this description, the expression "so as not to be movable relative to the body frame 21" may comprehend not only a case where a certain part or member is directly fixed to the body frame but also a case where the certain part of member is fixed to a leaning vehicle component (a fuel tank, a bracket, the power unit 24, etc.) which is fixed on the body frame 21. Here the term "fixed" may comprehend a case that a certain part or member is fixed by way of a damping member or the like.

The disclosed concept can be implemented with many different embodiments. This description should be understood to provide a principle embodiment of the disclosed concept. The preferred embodiment which is at least described or illustrated in this description is so described or illustrated based on the understanding that the embodiment is not intended to limit the disclosed concept.

The disclosed concept comprehends every embodiment which comprises an equivalent element, a modification, a deletion, a combination (for example, a combination of characteristics of various embodiments), an improvement and an alteration which can be recognized by those skilled in the art based on the embodiment disclosed in this description. The limitative matters of claims should be construed widely based on terms used in the claims and hence should not be limited by the embodiment described in this specification or the prosecution of this patent application. Those embodiments should be construed as non-exclusive. For example, in this description, the terms "preferable" and "may" should be construed as being non-exclusive, and those terms mean, respectively, that it is "preferable but not limited thereto" and that it "may be acceptable but not limited thereto."

## Claims

1. A leaning vehicle (1) comprising:
a body frame (21) that is leanable leftward (L) and rightward (R) of the leaning vehicle (1);
a left front wheel (31) and a right front wheel (32) that are arranged side by side in a left-right direction (FL-FR) of the body frame (21);
a left suspension portion (7) supporting the left front wheel (31) such that the left front wheel (31) is turnable about a left steering axis (SL);
a right suspension portion (8) supporting the right front wheel (32) such that the right front wheel (32) is turnable about a right steering axis (31); and
a link mechanism (5) configured to change positions of the left front wheel (31) and the right front wheel (32) relative to the body frame (21) to cause the body frame (21) to lean leftward (L) or rightward (R) of the leaning vehicle (1);
wherein the link mechanism (5) comprises:
an upper cross member (51);
a lower cross member (52) disposed below the upper cross member (51) in an up-down (FU-FD) direction of the body frame (21);
a left side member (53) disposed such that the left steering axis (SL) extends though the left side member (53); and
a right side member (54) disposed such that the right steering axis (SR) extends through the right side member (54);
wherein the left side member (53) comprises:
an upper left axis supporting portion (53a) defining an upper left leaning axis (LUL) extending in a front-rear direction (FF-FB) of the body frame (21); and
a lower left axis supporting portion (53b) defining a lower left leaning axis (LDL) extending in the front-rear direction (FF-FB) of the body frame (21);
wherein the right side member (54) comprises:
an upper right axis supporting portion (54a) defining an upper right leaning axis (LUR) extending in a front-rear direction (FF-FB) of the body frame (21); and
a lower right axis supporting portion (54b) defining a lower right leaning axis (LDR) extending in the front-rear direction (FF-FB) of the body frame (21);
wherein a left portion of the upper cross member (51) is coupled to the left side member (53) such that the left portion of the upper cross member (51) is turnable about the upper left leaning axis(LUL);
wherein a left portion of the lower cross member (52) is coupled to the left side member (53) such that the left portion of the lower cross member (52) is turnable about the lower left leaning axis (LDL);
wherein a right portion of the upper cross member (51) is coupled to the right side member (54) such that the right portion of the upper cross member (51) is turnable about the upper right leaning axis (LUR);
wherein a right portion of the lower cross member (52) is coupled to the right side member (54) such that the right portion of the lower cross member (52) is turnable about the lower right leaning axis (LDR);
wherein when the body frame (21) is caused to lean leftward (L) or rightward (R) of the leaning vehicle (1) by changing the positions of the left front wheel (31) and the right front wheel (32) relative to the body frame (21), as viewed from the front-rear direction (FF-FB) of the body frame (21), not only a straight line connecting the upper left leaning axis (LUL) and the upper right leaning axis (LUR) extends parallel to a straight line connecting the lower left leaning axis (LDL) and the lower right leaning axis (LDR) but also a straight line connecting the upper left leaning axis (LUL) and the lower left leaning axis (LDL) extends parallel to a straight line connecting the upper right leaning axis (LUR) and the lower right leaning axis (LDR);
wherein at least one of the upper left leaning axis (LUL) and the lower left leaning axis (LDL) is offset from the left steering axis (SL) in the left-right direction (FL-FR) of the body frame (21) as viewed from the front-rear direction (FF-FB) of the body frame (21);
wherein at least one of the upper right leaning axis (LUR) and the lower right leaning axis (LDR) is offset from the right steering axis (SR) in the left-right direction (FL-FR) of the body frame (21) as viewed from the front-rear direction (FF-FB) of the body frame (21);
wherein one of a first state and a second state is selectively taken;
wherein in a case where the first state is selected:
at least one of the upper left leaning axis (LUL) and the lower left leaning axis (LDL) in the left side member (53) is offset leftward (FL) from the left steering axis (SL) as viewed from the front-rear direction (FF-FB) of the body frame (21); and
at least one of the upper right leaning axis (LUR) and the lower right leaning axis (LDR) in the right side member (54) is offset rightward (FR) from the right steering axis (SR) as viewed from the front-rear direction (FF-FB) of the body frame (21);
wherein in a case where the second state is selected:
at least one of the upper left leaning axis (LUL) and the lower left leaning axis (LDL) in the left side member (53) is offset rightward (FR) from the left steering axis (SL) as viewed from the front-rear direction (FF-FB) of the body frame (21); and
at least one of the upper right leaning axis (LUR) and the lower right leaning axis (LDR) in the right side member (54) is offset leftward (FL) from the right steering axis (SR) as viewed from the front-rear direction (FF-FB) of the body frame (21); and
wherein in any case where the first state or the second state is selected:
an offset amount in association with the left side member (53) is equal to an offset amount in association with the right side member (53);
a left straight line (L1, L2) connecting the upper left leaning axis (LUL) and the lower left leaning axis (LDL) overlaps a ground contact surface (31a) of the left front wheel (31) as viewed from the front-rear direction (FF-FB) of the body frame (21); and
a right straight line (L2, L1) connecting the upper right leaning axis (LUR) and the lower right leaning axis (LDR) overlaps a ground contact surface (32a) of the right front wheel (32) as viewed from the front-rear direction (FF-FB) of the body frame (21),
**characterized in that**
a first side member (11), that is to be mounted on the leaning vehicle (1) and is configured to serve as the left side member (53) in the first state, is disposed in a position where a second side member (12), that is to be mounted on the leaning vehicle (1), in the first state is disposed, so as to cause the first side member (11) to serve as the right side member (54) in the second state and the inclining direction of the right straight line (L1) relative to the right steering axis (SR) in the second state to become opposite to the inclining direction of the right straight line (L2) relative to the right steering axis (SR) in the first state,
the second side member (12), that is configured to serve as the right side member (54) in the first state, is disposed in the position where the first side member (11) in the first state is disposed so as to cause the second side member (12) to serve as the left side member (53) in the second state and the inclining direction of the left straight line (L2) relative to the left steering axis (SL) in the second state to become opposite to the inclining direction of the left straight line (L1) relative to the left steering axis (SL) in the first state, and
the tread width (TW1, TW2) changes between the first state and the second state.

2. The leaning vehicle (1) according to claim 1,
wherein in the case where the first state is selected:
both of the upper left leaning axis (LUL) and the lower left leaning axis (LDL) in the left side member (53) is offset leftward (FL) from the left steering axis (SL) as viewed from the front-rear direction (FF-FB) of the body frame (21); and
both of the upper right leaning axis (LUR) and the lower right leaning axis (LDR) in the right side member (54) is offset rightward (FR) from the right steering axis (SR) as viewed from the front-rear direction (FF-FB) of the body frame (21); and
wherein in the case where the second state is selected:
both of the upper left leaning axis (LUL) and the lower left leaning axis (LDL) in the left side member (53) is offset rightward (FR) from the left steering axis (SL) as viewed from the front-rear direction (FF-FB) of the body frame (21); and
both of the upper right leaning axis (LUR) and the lower right leaning axis (LDR) in the right side member (54) is offset leftward (FL) from the right steering axis (SR) as viewed from the front-rear direction (FF-FB) of the body frame (21).

3. The leaning vehicle (1) according to claim 2,
wherein an offset amount of the upper left leaning axis (LUL) is different from an offset amount of the lower left leaning axis (LDL); and
wherein an offset amount of the upper right leaning axis (LUR) is different from an offset amount of the lower right leaning axis (LDR).

4. The leaning vehicle (1) according to any one of claims 1 to 3,
wherein a distance (W1) between the lower left leaning axis (LDL) at the lower left axis supporting portion (53b) and the lower right leaning axis (LDR) at the lower right axis supporting portion (54b) is equal to a distance (W2) between the upper left leaning axis (LUL) at the upper left axis supporting portion (53a) and the upper right leaning axis (LUR) at the upper right axis supporting portion (54a).

5. The leaning vehicle (1) according to any one of claims 1 to 4, comprising:
a steering member (61) that is turnable relative to the body frame (21); and
a steering force transmission mechanism (63) configured to cause the left suspension portion (7) and the right suspension portion (8) to turn about the left steering axis (SL) and the right steering axis (SR) respectively, in a direction corresponding to a turning direction of the steering member (61);
wherein the steering force transmission mechanism (63) comprises:
a transmission member (637) configured to transmit a turning force of the steering member (61) to the left suspension portion (7) and the right suspension portion (8);
a left leaning axis supporting portion (635b) defining a left leaning axis (LJL) extending in the front-rear direction (FF-FB) of the body frame (21); and
a right leaning axis supporting portion (636b) defining a right leaning axis (LJR) extending in the front-rear direction (FF-FB) of the body frame (21);
wherein a left portion of the transmission member (637) is coupled to the left suspension portion (7) such that the left portion of the transmission member (637) is turnable about the left leaning axis (LJL);
wherein a right portion of the transmission member (637) is coupled to the right suspension portion (8) such that the right portion of the transmission member (637) is turnable about the right leaning axis (LJR); and
wherein in any case where the first state or the second state is selected:
the left straight line intersects the left axis supporting portion (635b) as viewed from the front-rear direction (FF-FB) of the body frame (21); and
the right straight line intersects the right axis supporting portion (636b) as viewed from the front-rear (FF-FB) direction of the body frame (21).

6. The leaning vehicle (1) according to claim 5,
wherein a distance (W3) between the left leaning axis at the left axis supporting portion and the right leaning axis at the right axis supporting portion is equal to a distance (W2) between the upper left leaning axis (LUL) at the upper left axis supporting portion (53a) and the upper right leaning axis (LUR) at the upper right axis supporting portion (54a).

7. The leaning vehicle (1) according to any one of claims 1 to 6,
wherein a scrub radius (RL1) of the left front wheel (31) in the case where the first state is selected is equal to a scrub radius (RL2) of the left front wheel (31) in the case where the second state is selected; and
wherein a scrub radius (RR1) of the right front wheel (32) in the case where the first state is selected is equal to a scrub radius (RR2) of the right front wheel (32) in the case where the second state is selected.

8. The leaning vehicle (1) according to any one of claims 1 to 7, comprising:
a steering member (61) that is turnable relative to the body frame (21); and
a rear wheel (4) disposed behind the left front wheel (31) and the right front wheel (32) in the front-rear direction of the body frame (21);
wherein in a case where the body frame (21) stands upright and the steering member (61) is placed in a neutral position, as viewed from the left-right direction (FL-FR) of the body frame (21), a straight line connecting a ground contact point (31g) of the left front wheel (31) or the right front wheel (32) and a ground contact point (4g) of the rear wheel (4) extends parallel to each of the upper left leaning axis (LUL), the lower left leaning axis (LDL), the upper right leaning axis (LUR), and the lower right leaning axis (LDR).

9. A method for changing a tread width (TW1, TW2) of a leaning vehicle (1), wherein the leaning vehicle (1) comprises:
a body frame (21) that is leanable leftward (L) and rightward (R) of the leaning vehicle (1);
a left front wheel (31) and a right front wheel (32) that are arranged side by side in a left-right direction (FL-FR) of the body frame (21);
a left suspension portion (7) supporting the left front wheel (31) such that the left front wheel (31) is turnable about a left steering axis (SL);
a right suspension portion (8) supporting the right front wheel (32) such that the right front wheel (32) is turnable about a right steering axis (31); and
a link mechanism (5) configured to change positions of the left front wheel (31) and the right front wheel (32) relative to the body frame (21) to cause the body frame (21) to lean leftward (L) or rightward (R) of the leaning vehicle (1);
wherein the link mechanism (5) comprises:
an upper cross member (51);
a lower cross member (52) disposed below the upper cross member (51) in an up-down (FU-FD) direction of the body frame (21);
a left side member (53) disposed such that the left steering axis (SL) extends though the left side member (53); and
a right side member (54) disposed such that the right steering axis (SR) extends through the right side member (54);
wherein the left side member (53) comprises:
an upper left axis supporting portion (53a) defining an upper left leaning axis (LUL) extending in a front-rear direction (FF-FB) of the body frame (21); and
a lower left axis supporting portion (53b) defining a lower left leaning axis (LDL) extending in the front-rear direction (FF-FB) of the body frame (21);
wherein the right side member (54) comprises:
an upper right axis supporting portion (54a) defining an upper right leaning axis (LUR) extending in a front-rear direction (FF-FB) of the body frame (21); and
a lower right axis supporting portion (54b) defining a lower right leaning axis (LDR) extending in the front-rear direction (FF-FB) of the body frame (21);
wherein a left portion of the upper cross member (51) is coupled to the left side member (53) such that the left portion of the upper cross member (51) is turnable about the upper left leaning axis(LUL);
wherein a left portion of the lower cross member (52) is coupled to the left side member (53) such that the left portion of the lower cross member (52) is turnable about the lower left leaning axis (LDL);
wherein a right portion of the upper cross member (51) is coupled to the right side member (54) such that the right portion of the upper cross member (51) is turnable about the upper right leaning axis (LUR);
wherein a right portion of the lower cross member (52) is coupled to the right side member (54) such that the right portion of the lower cross member (52) is turnable about the lower right leaning axis (LDR);
wherein when the body frame (21) is caused to lean leftward (L) or rightward (R) of the leaning vehicle (1) by changing the positions of the left front wheel (31) and the right front wheel (32) relative to the body frame (21), as viewed from the front-rear direction (FF-FB) of the body frame (21), not only a straight line connecting the upper left leaning axis (LUL) and the upper right leaning axis (LUR) extends parallel to a straight line connecting the lower left leaning axis (LDL) and the lower right leaning axis (LDR) but also a straight line connecting the upper left leaning axis (LUL) and the lower left leaning axis (LDL) extends parallel to a straight line connecting the upper right leaning axis (LUR) and the lower right leaning axis (LDR);
wherein the method comprises:
providing a first side member (11) and a second side member (12), which are to be mounted on the leaning vehicle (1),
wherein the first side member (11) has a first center axis (A1) and the second side member (12) has a second center axis (A2),
wherein the first side member (11) includes a first upper axis (U1) and a first lower axis (D1) and
the second side member (12) includes a second upper axis (U2) and a second lower axis (D2),
wherein, in a state where the first side member (11) and the second side member (12) are mounted on the leaning vehicle (1), at least one of the first upper axis (U1) and the first lower axis (D1) is offset from the first center axis (A1) in the left-right direction (FL-FR) of the body frame (21) as viewed from the front-rear direction (FF-FB) of the body frame (21),
and at least one of the second upper axis (U2) and the second lower axis (D2) is offset from the second center axis (A2) in the left-right direction (FL-FR) of the body frame (21) as viewed from the front-rear direction (FF-FB) of the body frame (21),
**characterized by** the method further comprising:
using the first side member (11) as the left side member (53) with the first upper axis (U1) being the upper left leaning axis (LUL) and the first lower axis (D1) being the lower left leaning axis (LDL), and using the second side member (12) as the right side member (54) with the second upper axis (U2) being the upper right leaning axis (LUR) and the second lower axis (D2) being the lower right leaning axis (LDR) in a first state,
using the first side member (11) as the right side member (54) with the first upper axis (U1) being the upper right leaning axis (LUR) and the first lower axis (D1) being the lower right leaning axis (LDR), and using the second side member (12) as the left side member (53) with the second upper axis (U2) being the upper left leaning axis (LUL) and the second lower axis (D2) being the lower left leaning axis (LDL) in a second state,
wherein in any case where the first state or the second state is selected:
an offset amount in association with the left side member (53) is equal to an offset amount in association with the right side member (53);
a left straight line connecting the upper left leaning axis (LUL) and the lower left leaning axis (LDL) overlaps a ground contact surface (31a) of the left front wheel (31) as viewed from the front-rear direction (FF-FB) of the body frame (21); and
a right straight line connecting the upper right leaning axis (LUR) and the lower right leaning axis (LDR) overlaps a ground contact surface (32a) of the right front wheel (32) as viewed from the front-rear direction (FF-FB) of the body frame (21).

## Patentansprüche

1. Ein Neigefahrzeug (1), umfassend:
einen Körperrahmen (21), der nach links (L) und nach rechts (R) des Neigefahrzeugs (1) neigbar ist;
ein linkes Vorderrad (31) und ein rechtes Vorderrad (32), die Seite an Seite in einer links-rechts-Richtung (FL-FR) des Körperrahmens (21) angeordnet sind;
einen linken Aufhängungsabschnitt (7), der das linke Vorderrad (31) so stützt, dass das linke Vorderrad (31) um eine linke Lenkachse (SL) drehbar ist;
einen rechten Aufhängungsabschnitt (8), der das rechte Vorderrad (32) so stützt, dass das rechte Vorderrad (32) um eine rechte Lenkachse (31) drehbar ist; und
einen Koppelmechanismus (5), der konfiguriert ist, Positionen des linken Vorderrads (31) und des rechten Vorderrads (32) relativ zu dem Körperrahmen (21) zu ändern, um den Körperrahmen (21) nach links (L) oder nach rechts (R) des Neigefahrzeugs (1) neigen zu lassen;
wobei der Koppelmechanismus (5) umfasst:
ein oberes Querelement (51);
ein unteres Querelement (52), das unter dem oberen Querelement (51) in einer oben-unten-Richtung (FU-FD) des Körperrahmens (21) angeordnet ist;
ein linkes Seitenelement (53), das so angeordnet ist, dass sich die linke Lenkachse (SL) durch das linke Seitenelement (53) erstreckt; und
ein rechtes Seitenelement (54), das so angeordnet ist, dass sich die rechte Lenkachse (SR) durch das rechte Seitenelement (54) erstreckt;
wobei das linke Seitenelement (53) umfasst:
einen Stützabschnitt einer oberen linken Achse (53a), der eine obere linke Neigungsachse (LUL) definiert, die sich in einer vorne-hinten Richtung (FF-FB) des Körperrahmens (21) erstreckt; und
einen Stützabschnitt einer unteren linken Achse (53b), der eine untere linke Neigungsachse (LDL) definiert, die sich in der vorne-hinten Richtung (FF-FB) des Körperrahmens (21) erstreckt;
wobei das rechte Seitenelement (54) umfasst:
einen Stützabschnitt einer oberen rechten Achse (54a), der eine obere rechte Neigungsachse (LUR) definiert, die sich in einer vorne-hinten Richtung (FF-FB) des Körperrahmens (21) erstreckt; und
einen Stützabschnitt einer unteren rechten Achse (54b), der eine untere rechte Neigungsachse (LDR) definiert, die sich in der vorne-hinten Richtung (FF-FB) des Körperrahmens (21) erstreckt;
wobei ein linker Abschnitt des oberen Querelements (51) an das linke Seitenelement (53) gekoppelt ist, sodass der linke Abschnitt des oberen Querelements (51) um die obere linke Neigungsachse (LUL) drehbar ist;
wobei ein linker Abschnitt des unteren Querelements (52) an das linke Seitenelement (53) gekoppelt ist, sodass der linke Abschnitt des unteren Querelements (52) um die untere linke Neigungsachse (LDL) drehbar ist;
wobei ein rechter Abschnitt des oberen Querelements (51) an das rechte Seitenelement (54) gekoppelt ist, sodass der rechte Abschnitt des oberen Querelements (51) um die obere rechte Neigungsachse (LUR) drehbar ist;
wobei ein rechter Abschnitt des unteren Querelements (52) an das rechte Seitenelement (54) gekoppelt ist, sodass der rechte Abschnitt des unteren Querelements (52) um die untere rechte Neigungsachse (LDR) drehbar ist;
wobei, wenn der Körperrahmen (21) veranlasst wird, sich nach links (L) oder nach rechts (R) des Neigungsfahrzeugs (1) zu neigen, indem die Positionen des linken Vorderrads (31) und
des rechten Vorderrads (32) relativ zu dem Körperrahmen (21) geändert werden, von der vorne-hinten-Richtung (FF-FB) des Körperrahmens (21) gesehen, sich nicht nur eine gerade Linie, die die obere linke Neigungsachse (LUL) und die obere rechte Neigungsachse (LUR) verbindet, parallel zu einer geraden Linie erstreckt, die die untere linke Neigungsachse (LDL) und die untere rechte Neigungsachse (LDR) verbindet, sondern sich auch eine gerade Linie,
die die obere linke Neigungsachse (LUL) und die untere linke Neigungsachse (LDL) verbindet,
parallel zu einer geraden Linie erstreckt, die die obere rechte Neigungsachse (LUR) und die untere rechte Neigungsachse (LDR) verbindet;
wobei zumindest eine von der oberen linken Neigungsachse (LUL) und der unteren linken Neigungsachse (LDL) von der linken Lenkachse (SL) in der links-rechts-Richtung (FL-FR) des Körperrahmens (21) von der vorne-hinten-Richtung (FF-FB) des Körperrahmens (21) gesehen versetzt ist;
wobei zumindest eine von der oberen rechten Neigungsachse (LUR) und der unteren rechten Neigungsachse (LDR) von der rechten Lenkachse (SR) in der links-rechts-Richtung (FL-FR) des Körperrahmens (21) von der vorne-hinten-Richtung (FF-FB) des Körperrahmens (21) gesehen versetzt ist;
wobei einer von einem ersten Zustand und einem zweiten Zustand selektiv genommen wird;
wobei in einem Fall, in dem der erste Zustand gewählt wird:
zumindest eine von der oberen linken Neigungsachse (LUL) und der unteren linken Neigungsachse (LDL) in dem linken Seitenelement (53) nach links (FL) von der linken Lenkachse (SL) von der vorne-hinten-Richtung (FF-FB) des Körperrahmens (21) gesehen versetzt ist; und
zumindest eine von der oberen rechten Neigungsachse (LUR) und der unteren rechten Neigungsachse (LDR) in dem rechten Seitenelement (54) nach rechts (FR) von der rechten Lenkachse (SR) von der vorne-hinten-Richtung (FF-FB) des Körperrahmens (21) gesehen versetzt ist;
wobei in einem Fall, in dem der zweite Zustand gewählt wird:
zumindest eine von der oberen linken Neigungsachse (LUL) und der unteren linken Neigungsachse (LDL) in dem linken Seitenelement (53) nach rechts (FR) von der linken Lenkachse (SL) von der vorne-hinten-Richtung (FF-FB) des Körperrahmens (21) gesehen versetzt ist; und
zumindest eine von der oberen rechten Neigungsachse (LUR) und der unteren rechten Neigungsachse (LDR) in dem rechten Seitenelement (54) nach links (FL) von der rechten Lenkachse (SR) von der vorne-hinten-Richtung (FF-FB) des Körperrahmens (21) gesehen versetzt ist;
wobei in jedem Fall, in dem der erste Zustand oder der zweite Zustand gewählt wird:
eine Versatzmenge in Verbindung mit dem linken Seitenelement (53) gleich einer Versatzmenge in Verbindung mit dem rechten Seitenelement (53) ist;
eine linke gerade Linie (L1, L2), die die obere linke Neigungsachse (LUL) und die untere linke Neigungsachse (LDL) verbindet, eine Grundkontaktfläche (31a) des linken Vorderrads (31) von der vorne-hinten-Richtung (FF-FB) des Körperrahmens (21) gesehen überlappt; und
eine rechte gerade Linie (L2, L1), die die obere rechte Neigungsachse (LUR) und die untere rechte Neigungsachse (LDR) verbindet, eine Grundkontaktfläche (32a) des rechten Vorderrads (32) von der vorne-hinten-Richtung (FF-FB) des Körperrahmens (21) gesehen überlappt;
**dadurch gekennzeichnet, dass**
ein erstes Seitenelement (11), das an dem Neigungsfahrzeug (1) zu montieren ist und konfiguriert ist, als das linke Seitenelement (53) in dem ersten Zustand zu dienen, in einer Position angeordnet ist, in der ein zweites Seitenelement (12), das an dem Neigungsfahrzeug (1) zu montieren ist, in dem ersten Zustand angeordnet ist, um das erste Seitenelement (11) als das rechte Seitenelement (54) in dem zweiten Zustand dienen zu lassen und die Neigungsrichtung der rechten geraden Linie (L1) relativ zu der rechten Lenkachse (SR) in dem zweiten Zustand gegenteilig zu der Neigungsrichtung der rechten geraden Linie (L2) relativ zu der rechten Lenkachse (SR) in dem ersten Zustand werden zu lassen,
das zweite Seitenelement (12), das konfiguriert ist, als das rechte Seitenelement (54) in dem ersten Zustand zu dienen, in der Position angeordnet ist, in der das erste Seitenelement (11) in dem ersten Zustand angeordnet ist, um das zweite Seitenelement (12) als das linke Seitenelement (53) in dem zweiten Zustand dienen zu lassen und die Neigungsrichtung der linken geraden Linie (L2) relativ zu der linken Lenkachse (SL) in dem zweiten Zustand gegenteilig zu der Neigungsrichtung der linken geraden Linie (L1) relativ zu der linken Lenkachse (SL) in dem ersten Zustand werden zu lassen, und
sich die Laufflächenbreite (TW1, TW2) zwischen dem ersten Zustand und dem zweiten Zustand ändert.

2. Das Neigungsfahrzeug (1) nach Anspruch 1,
wobei in dem Fall, in dem der erste Zustand gewählt wird:
beide von der oberen linken Neigungsachse (LUL) und der unteren linken Neigungsachse (LDL) in dem linken Seitenelement (53) nach links (FL) von der linken Lenkachse (SL) von der vorne-hinten-Richtung (FF-FB) des Körperrahmens (21) gesehen versetzt sind; und
beide von der oberen rechten Neigungsachse (LUR) und der unteren rechten Neigungsachse (LDR) in dem rechten Seitenelement (54) nach rechts (FR) von der rechten Lenkachse (SR) von der vorne-hinten-Richtung (FF-FB) des Körperrahmens (21) gesehen versetzt sind; und
wobei in dem Fall, in dem der zweite Zustand gewählt wird:
beide von der oberen linken Neigungsachse (LUL) und der unteren linken Neigungsachse (LDL) in dem linken Seitenelement (53) nach rechts (FR) von der linken Lenkachse (SL) von der vorne-hinten-Richtung (FF-FB) des Körperrahmens (21) gesehen versetzt sind; und beide von der oberen rechten Neigungsachse (LUR) und der unteren rechten Neigungsachse (LDR) in dem rechten Seitenelement (54) nach links (FL) von der rechten Lenkachse (SR) von der vorne-hinten-Richtung (FF-FB) des Körperrahmens (21) gesehen versetzt sind.

3. Das Neigungsfahrzeug (1) nach Anspruch 2,
wobei eine Versatzmenge der oberen linken Neigungsachse (LUL) von einer Versatzmenge der unteren linken Neigungsachse (LDL) unterschiedlich ist; und
wobei eine Versatzmenge der oberen rechten Neigungsachse (LUR) von einer Versatzmenge der unteren rechten Neigungsachse (LDR) unterschiedlich ist.

4. Das Neigungsfahrzeug (1) nach irgendeinem von Ansprüchen 1 bis 3,
wobei eine Distanz (W1) zwischen der unteren linken Neigungsachse (LDL) an dem Stützabschnitt der unteren linken Achse (53b) und der unteren rechten Neigungsachse (LDR) an dem Stützabschnitt der unteren rechten Achse (54b) gleich einer Distanz (W2) zwischen der oberen linken Neigungsachse (LUL) an dem Stützabschnitt der oberen linken Achse (53a) und der oberen rechten Neigungsachse (LUR) an dem Stützabschnitt der oberen rechten Achse (54a) ist.

5. Das Neigungsfahrzeug (1) nach irgendeinem von Ansprüchen 1 bis 4, umfassend:
ein Lenkelement (61), das relativ zu dem Körperrahmen (21) drehbar ist; und
Lenkkraftübertragungsmechanismus (63), der konfiguriert ist, den linken Aufhängungsabschnitt (7) und den rechten Aufhängungsabschnitt (8) zu veranlassen, sich jeweils um die linke Lenkachse (SL) und die rechte Lenkachse (SR) in einer einer Drehrichtung des Lenkelements (61) entsprechenden Richtung zu drehen;
wobei der Lenkkraftübertragungsmechanismus (63) umfasst:
ein Übertragungselement (637), das konfiguriert ist, eine Drehkraft des Lenkelements (61) an den linken Aufhängungsabschnitt (7) und den rechten Aufhängungsabschnitt (8) zu übertragen;
einen Stützabschnitt einer linken Neigungsachse (635b), der eine linke Neigungsachse (LJL) definiert, die sich in der vorne-hinten-Richtung (FF-FB) des Körperrahmens (21) erstreckt; und einen Stützabschnitt einer rechten Neigungsachse (636b), der eine rechte Neigungsachse (LJR) definiert, die sich in der vorne-hinten-Richtung (FF-FB) des Körperrahmens (21) erstreckt;
wobei ein linker Abschnitt des Übertragungselements (637) an den linken Aufhängungsabschnitt (7) gekoppelt ist, sodass der linke Abschnitt des Übertragungselements (637) um die linke Neigungsachse (LJL) drehbar ist,
wobei ein rechter Abschnitt des Übertragungselements (637) an den rechten Aufhängungsabschnitt (8) gekoppelt ist, sodass der rechte Abschnitt des Übertragungselements (637) um die rechte Neigungsachse (LJR) drehbar ist; und
wobei in jedem Fall, in dem der erste Zustand oder der zweite Zustand gewählt wird:
die linke gerade Linie den Stützabschnitt der linken Achse (635b) von der vorne-hinten-Richtung (FF-FB) des Körperrahmens (21) gesehen schneidet; und
die rechte gerade Linie den Stützabschnitt der rechten Achse (636b) von der vorne-hinten-Richtung (FF-FB) des Körperrahmens (21) gesehen schneidet.

6. Das Neigungsfahrzeug (1) nach Anspruch 5,
wobei eine Distanz (W3) zwischen der linken Neigungsachse an dem Stützabschnitt der linken Achse und der rechten Neigungsachse an dem Stützabschnitt der rechten Achse gleich einer Distanz (W2) zwischen der oberen linken Neigungsachse (LUL) an dem Stützabschnitt der oberen linken Achse (53a) und der oberen rechten Neigungsachse (LUR) an dem Stützabschnitt der oberen rechten Achse (54a) ist.

7. Das Neigungsfahrzeug (1) nach irgendeinem von Ansprüchen 1 bis 6,
wobei ein Lenkrollradius (RL1) des linken Vorderrads (31) in dem Fall, in dem der erste Zustand gewählt wird, gleich einem Lenkrollradius (RL2) des linken Vorderrads (31) in dem Fall ist, in dem der zweite Zustand gewählt wird; und
wobei ein Lenkrollradius (RR1) des rechten Vorderrads (32) in dem Fall, in dem der erste Zustand gewählt wird, gleich einem Lenkrollradius (RR2) des rechten Vorderrads (32) in dem Fall ist, in dem der zweite Zustand gewählt wird.

8. Das Neigungsfahrzeug (1) nach irgendeinem von Ansprüchen 1 bis 7, umfassend:
ein Lenkelement (61), das relativ zu dem Körperrahmen (21) drehbar ist; und
ein Hinterrad (4), das hinter dem linken Vorderrad (31) und dem rechten Vorderrad (32) in der vorne-hinten-Richtung des Körperrahmens (21) angeordnet ist;
wobei in einem Fall, in dem der Körperrahmen (21) aufrecht steht und das Lenkelement (61) in einer neutralen Position von der links-rechts-Richtung (FL-FR) des Körperrahmens (21) gesehen platziert ist, sich eine gerade Linie, die einen Grundkontaktpunkt (31g) des linken Vorderrads (31) oder des rechten Vorderrads (32) und einen Grundkontaktpunkt (4g) des Hinterrads (4) verbindet, parallel zu jeder von der oberen linken Neigungsachse (LUL), der unteren linken Neigungsachse (LDL), der oberen rechten Neigungsachse (LUR) und der unteren rechten Neigungsachse (LDR) erstreckt.

9. Ein Verfahren zum Ändern einer Laufflächenbreite (TW1, TW2) eines Neigungsfahrzeugs (1), wobei das Neigungsfahrzeug (1) umfasst:
einen Körperrahmen (21), der nach links (L) und nach rechts (R) des Neigefahrzeugs (1) neigbar ist;
ein linkes Vorderrad (31) und ein rechtes Vorderrad (32), die Seite an Seite in einer links-rechts-Richtung (FL-FR) des Körperrahmens (21) angeordnet sind;
einen linken Aufhängungsabschnitt (7), der das linke Vorderrad (31) so stützt, dass das linke Vorderrad (31) um eine linke Lenkachse (SL) drehbar ist;
einen rechten Aufhängungsabschnitt (8), der das rechte Vorderrad (32) so stützt, dass das rechte Vorderrad (32) um eine rechte Lenkachse (31) drehbar ist; und
einen Koppelmechanismus (5), der konfiguriert ist, Positionen des linken Vorderrads (31) und des rechten Vorderrads (32) relativ zu dem Körperrahmen (21) zu ändern, um den Körperrahmen (21) nach links (L) oder nach rechts (R) des Neigefahrzeugs (1) neigen zu lassen;
wobei der Koppelmechanismus (5) umfasst:
ein oberes Querelement (51);
ein unteres Querelement (52), das unter dem oberen Querelement (51) in einer oben-unten-Richtung (FU-FD) des Körperrahmens (21) angeordnet ist;
ein linkes Seitenelement (53), das so angeordnet ist, dass sich die linke Lenkachse (SL) durch das linke Seitenelement (53) erstreckt; und
ein rechtes Seitenelement (54), das so angeordnet ist, dass sich die rechte Lenkachse (SR) durch das rechte Seitenelement (54) erstreckt;
wobei das linke Seitenelement (53) umfasst:
einen Stützabschnitt einer oberen linken Achse (53a), der eine obere linke Neigungsachse (LUL) definiert, die sich in einer vorne-hinten Richtung (FF-FB) des Körperrahmens (21) erstreckt; und
einen Stützabschnitt einer unteren linken Achse (53b), der eine untere linke Neigungsachse (LDL) definiert, die sich in der vorne-hinten Richtung (FF-FB) des Körperrahmens (21) erstreckt;
wobei das rechte Seitenelement (54) umfasst:
einen Stützabschnitt einer oberen rechten Achse (54a), der eine obere rechte Neigungsachse (LUR) definiert, die sich in einer vorne-hinten Richtung (FF-FB) des Körperrahmens (21) erstreckt; und
einen Stützabschnitt einer unteren rechten Achse (54b), der eine untere rechte Neigungsachse (LDR) definiert, die sich in der vorne-hinten Richtung (FF-FB) des Körperrahmens (21) erstreckt;
wobei ein linker Abschnitt des oberen Querelements (51) an das linke Seitenelement (53) gekoppelt ist, sodass der linke Abschnitt des oberen Querelements (51) um die obere linke Neigungsachse (LUL) drehbar ist;
wobei ein linker Abschnitt des unteren Querelements (52) an das linke Seitenelement (53) gekoppelt ist, sodass der linke Abschnitt des unteren Querelements (52) um die untere linke Neigungsachse (LDL) drehbar ist;
wobei ein rechter Abschnitt des oberen Querelements (51) an das rechte Seitenelement (54) gekoppelt ist, sodass der rechte Abschnitt des oberen Querelements (51) um die obere rechte Neigungsachse (LUR) drehbar ist;
wobei ein rechter Abschnitt des unteren Querelements (52) an das rechte Seitenelement (54) gekoppelt ist, sodass der rechte Abschnitt des unteren Querelements (52) um die untere rechte Neigungsachse (LDR) drehbar ist;
wobei, wenn der Körperrahmen veranlasst wird, sich nach links (L) oder nach rechts (R) des Neigungsfahrzeugs (1) zu neigen, indem die Positionen des linken Vorderrads (31) und des rechten Vorderrads (32) relativ zu dem Körperrahmen (21) geändert werden, von der vorne-hinten-Richtung (FF-FB) des Körperrahmens (21) gesehen, sich nicht nur eine gerade Linie,
die die obere linke Neigungsachse (LUL) und die obere rechte Neigungsachse (LUR) verbindet, parallel zu einer geraden Linie erstreckt, die die untere linke Neigungsachse (LDL) und die untere rechte Neigungsachse (LDR) verbindet, sondern sich auch eine gerade Linie, die die obere linke Neigungsachse (LUL) und die untere linke Neigungsachse (LDL) verbindet, parallel zu einer geraden Linie erstreckt, die die obere rechte Neigungsachse (LUR) und die untere rechte Neigungsachse (LDR) verbindet;
wobei das Verfahren umfasst:
Vorsehen eines ersten Seitenelements (11) und eines zweiten Seitenelements (12), die an dem Neigungsfahrzeug (1) zu montieren sind,
wobei das erste Seitenelement (11) eine erste Mittelachse (A1) aufweist und das zweite Seitenelement (12) eine zweite Mittelachse (A2) aufweist,
wobei das erste Seitenelement (11) eine erste obere Achse (U1) und eine erste untere Achse (D1) aufweist, und
das zweite Seitenelement (12) eine zweite obere Achse (U2) und eine zweite untere Achse (D2) aufweist,
wobei in einem Zustand, in dem das erste Seitenelement (11) und das zweite Seitenelement (12) an dem Neigungsfahrzeug (1) montiert sind, zumindest eine von der ersten oberen Achse (U1) und der ersten unteren Achse (D1) von der ersten Mittelachse (A1) in der links-rechts-Richtung (FL-FR) des Körperrahmens (21) von der vorne-hinten-Richtung (FF-FB) des Körperrahmens (21) gesehen versetzt ist,
und zumindest eine von der zweiten oberen Achse (U2) und der zweiten unteren Achse (D2) von der zweiten Mittelachse (A2) in der links-rechts-Richtung (FL-FR) des Körperrahmens (21) von der vorne-hinten-Richtung (FF-FB) des Körperrahmens (21) gesehen versetzt ist,
**dadurch gekennzeichnet, dass** das Verfahren weiterhin umfasst:
Verwenden des ersten Seitenelements (11) als das linke Seitenelement (53), wobei die erste obere Achse (U1) die obere linke Neigungsachse (LUL) ist und die erste untere Achse (D1) die untere linke Neigungsachse (LDL) ist, und Verwenden des zweiten Seitenelements (12) als das rechte Seitenelement (54), wobei die zweite obere Achse (U2) die obere rechte Neigungsachse (LUR) ist und die zweite untere Achse (D2) die untere rechte Neigungsachse (LDR) ist, in einem ersten Zustand,
Verwenden des ersten Seitenelements (11) als das rechte Seitenelement (54), wobei die erste obere Achse (U1) die obere rechte Neigungsachse (LUR) ist und die erste untere Achse (D1) die untere rechte Neigungsachse (LDR) ist, und Verwenden des zweiten Seitenelements (12) als das linke Seitenelement (53), wobei die zweite obere Achse (U2) die obere linke Neigungsachse (LUL) ist und die zweite untere Achse (D2) die untere linke Neigungsachse (LDL) ist, in einem zweiten Zustand,
wobei in jedem Fall, in dem der erste Zustand oder der zweite Zustand gewählt wird:
eine Versatzmenge in Verbindung mit dem linken Seitenelement (53) gleich einer Versatzmenge in Verbindung mit dem rechten Seitenelement (53) ist;
eine linke gerade Linie, die die obere linke Neigungsachse (LUL) und die untere linke Neigungsachse (LDL) verbindet, eine Grundkontaktfläche (31a) des linken Vorderrads (31) von der vorne-hinten-Richtung (FF-FB) des Körperrahmens (21) gesehen überlappt; und
eine rechte gerade Linie, die die obere rechte Neigungsachse (LUR) und die untere rechte Neigungsachse (LDR) verbindet, eine Grundkontaktfläche (32a) des rechten Vorderrads (32) von der vorne-hinten-Richtung (FF-FB) des Körperrahmens (21) gesehen überlappt.

## Revendications

1. Véhicule s'inclinant (1) comprenant :
un cadre (21) qui peut s'incliner vers la gauche (L) et vers la droite (R) du véhicule s'inclinant (1),
une roue avant gauche (31) et une roue avant droite (32) qui sont disposées côte à côte dans la direction gauche droite (FL - FR) du cadre (21),
un organe de suspension gauche (7) supportant la roue avant gauche (31) de sorte à ce que la roue avant gauche (31) puisse tourner autour d'un axe de direction gauche (SL),
un organe de suspension droit (8) supportant la roue avant droite (32) de sorte à ce que la roue avant droite (32) puisse tourner autour d'un axe de direction droit (31), et
un mécanisme de liaison (5) configuré pour modifier les positions de la roue avant gauche (31) et de la roue avant droite (32) par rapport au cadre (21) afin d'amener le cadre (21) à pencher vers la gauche (L) ou vers la droite (R) du véhicule s'inclinant (1),
dans lequel le mécanisme de liaison (5) comprend :
un élément transversal supérieur (51),
un élément transversal inférieur (52) disposé en dessous de l'élément transversal supérieur (51) dans la direction haut bas (FU - FD) du cadre (21),
un élément latéral gauche (53) disposé de sorte à ce que l'axe de direction gauche (SL) s'étende au travers de l'élément latéral gauche (53), et
un élément latéral droit (54) disposé de sorte à ce que l'axe de direction droit (SR) s'étende au travers de l'élément latéral droit (54),
dans lequel l'élément latéral gauche (53) comprend :
un organe de support d'axe gauche supérieur (53a) définissant un axe d'inclinaison gauche supérieur (LUL) s'étendant dans la direction avant arrière (FF - FB) du cadre (21), et
un organe de support d'axe gauche inférieur (53b) définissant un axe d'inclinaison gauche inférieur (LDL) s'étendant dans la direction avant arrière (FF - FB) du cadre (21),
dans lequel l'élément latéral droit (54) comprend :
un organe de support d'axe droit supérieur (54a) définissant un axe d'inclinaison droit supérieur (LUR) s'étendant dans la direction avant arrière (FF - FB) du cadre (21), et
un organe de support d'axe droit inférieur (54b) définissant un axe d'inclinaison droit inférieur (LDR) s'étendant dans la direction avant arrière (FF - FB) du cadre (21),
dans lequel la partie gauche de l'élément transversal supérieur (51) est couplée à l'élément latéral gauche (53) de sorte à ce que la partie gauche de l'élément transversal supérieur (51) puisse tourner autour de l'axe d'inclinaison gauche supérieur (LUL),
dans lequel la partie gauche de l'élément transversal inférieur (52) est couplée à l'élément latéral gauche (53) de sorte à ce que la partie gauche de l'élément transversal inférieur (52) puisse tourner autour de l'axe d'inclinaison gauche inférieur (LDL),
dans lequel la partie droite de l'élément transversal supérieur (51) est couplée à l'élément latéral droit (54) de sorte à ce que la partie droite de l'élément transversal supérieur (51) puisse tourner autour de l'axe d'inclinaison droit supérieur (LUR),
dans lequel la partie droite de l'élément transversal inférieur (52) est couplée à l'élément latéral droit (54) de sorte à ce que la partie droite de l'élément transversal inférieur (52) puisse tourner autour de l'axe d'inclinaison droit inférieur (LDR),
dans lequel, lorsque le cadre (21) est amené à pencher vers la gauche (L) ou vers la droite (R) du véhicule s'inclinant (1) en modifiant les positions de la roue avant gauche (31) et de la roue avant droite (32) par rapport au cadre (21), comme peut le voir à partir de la direction avant arrière (FF - FB) du cadre (21), c'est d'abord une ligne droite reliant l'axe d'inclinaison gauche supérieur (LUL) et l'axe d'inclinaison droit supérieur (LUR) qui s'étend parallèlement à une ligne droite reliant l'axe d'inclinaison gauche inférieur (LDL) et l'axe d'inclinaison droit inférieur (LDR), et c'est aussi une ligne droite reliant l'axe d'inclinaison gauche supérieur (LUL) et l'axe d'inclinaison gauche inférieur (LDL) qui s'étend parallèlement à une ligne droite reliant l'axe d'inclinaison droit supérieur (LUR) et l'axe d'inclinaison droit inférieur (LDR),
dans lequel au moins l'un de l'axe d'inclinaison gauche supérieur (LUL) et de l'axe d'inclinaison gauche inférieur (LDL) est décalé de l'axe de direction gauche (SL) dans la direction gauche droite (FL - FR) du cadre (21) comme on peut le voir à partir de la direction avant arrière (FF - FB) du cadre (21),
dans lequel au moins l'un de l'axe d'inclinaison droit supérieur (LUR) et de l'axe d'inclinaison droit inférieur (LDR) est décalé de l'axe de direction droit (SR) dans la direction gauche droite (FL - FR) du cadre (21) comme on peut le voir à partir de la direction avant arrière (FF - FB) du cadre (21),
dans lequel est choisi sélectivement un état parmi un premier état et un second état :
dans lequel dans le cas où le premier état est sélectionné :
au moins l'un de l'axe d'inclinaison gauche supérieur (LUL) et de l'axe d'inclinaison gauche inférieur (LDL) dans l'élément latéral gauche (53) est décalé vers la gauche (FL) de l'axe de direction gauche (SL) comme on peut le voir à partir de la direction avant arrière (FF - FB) du cadre (21), et
au moins l'un de l'axe d'inclinaison droit supérieur (LUR) et de l'axe d'inclinaison droit inférieur (LDR) dans l'élément latéral droit (54) est décalé vers la droite (FR) à partir de l'axe de direction droit (SR) comme on peut le voir à partir de la direction avant arrière (FF - FB) du cadre (21),
dans lequel dans le cas où le second état est sélectionné :
au moins l'un de l'axe d'inclinaison gauche supérieur (LUL) et de l'axe d'inclinaison gauche inférieur (LDL) dans l'élément latéral gauche (53) est décalé vers la droite (FR) de l'axe de direction gauche (SL) comme on peut le voir à partir de la direction avant arrière (FF - FB) du cadre (21), et
au moins l'un de l'axe d'inclinaison droit supérieur (LUR) et de l'axe d'inclinaison droit inférieur (LDR) dans l'élément latéral droit (54) est décalé vers la gauche (FL) à partir de l'axe de direction droit (SR) comme on peut le voir à partir de la direction avant arrière (FF - FB) du cadre (21),
dans lequel, dans tous les cas où le premier état ou le second état est sélectionné :
l'amplitude de décalage associée à l'élément latéral gauche (53) est égale à l'amplitude de décalage associée à l'élément latéral droit (53),
une ligne droite à gauche (L1, L2) reliant l'axe d'inclinaison gauche supérieur (LUL) et l'axe d'inclinaison gauche inférieur (LDL) chevauche la surface de contact avec le sol (31a) de la roue avant gauche (31) comme on peut le voir à partir de la direction avant arrière (FF - FB) du cadre (21), et
une ligne droite à droite (L2, L1) reliant l'axe d'inclinaison droit supérieur (LUR) et l'axe d'inclinaison droit inférieur (LDR) chevauche la surface de contact avec le sol (32a) de la roue avant droite (32) comme on peut le voir à partir de la direction avant arrière (FF - FB) du cadre (21), **caractérisé en ce que**
un premier élément latéral (11) qui doit être monté sur le véhicule s'inclinant (1) et qui est configuré pour servir d'élément latéral gauche (53) dans le premier état, est placé dans une position dans laquelle un second élément latéral (12), qui doit être monté sur le véhicule s'inclinant (1) dans le premier état, est placé de sorte à amener le premier élément latéral (11) à servir d'élément latéral droit (54) dans le second état, et à amener la direction d'inclinaison de la ligne droite à droite (Ll), par rapport à l'axe de direction droit (SR) dans le second état, à venir s'opposer à la direction d'inclinaison de la ligne droite à droite (L2) par rapport à l'axe de direction droit (SR) dans le premier état,
le second élément latéral (12) qui est configuré pour servir d'élément latéral droit (54) dans le premier état, est placé dans la position dans laquelle le premier élément latéral (11) dans le premier état est placé de sorte à amener le second élément latéral (12) à servir d'élément latéral gauche (53) dans le second état, et à amener la direction d'inclinaison de la ligne droite à gauche (L2), par rapport à l'axe de direction gauche (SL) dans le second état, à venir s'opposer à la direction d'inclinaison de la ligne droite à gauche (L1) par rapport à l'axe de direction gauche (SL) dans le premier état, et
la largeur de la bande de roulement (TW1, TW2) change entre le premier état et le second état.

2. Véhicule s'inclinant (1) selon la revendication 1, dans lequel, dans le cas où le premier état est sélectionné :
l'axe d'inclinaison gauche supérieur (LUL) et l'axe d'inclinaison gauche inférieur (LDL) dans l'élément latéral gauche (53) sont tous les deux décalés vers la gauche (FL) à partir de l'axe de direction gauche (SL) comme on peut le voir à partir de la direction avant arrière (FF - FB) du cadre (21), et
l'axe d'inclinaison droit supérieur (LUR) et l'axe d'inclinaison droit inférieur (LDR) dans l'élément latéral droit (54) sont tous les deux décalés vers la droite (FR) à partir de l'axe de direction droit (SR) comme on peut le voir à partir de la direction avant arrière (FF - FB) du cadre (21), et
dans lequel, dans le cas où le second état est sélectionné :
l'axe d'inclinaison gauche supérieur (LUL) et l'axe d'inclinaison gauche inférieur (LDL) dans l'élément latéral gauche (53) sont tous les deux décalés vers la droite (FR) à partir de l'axe de direction gauche (SL) comme on peut le voir à partir de la direction avant arrière (FF - FB) du cadre (21), et
l'axe d'inclinaison droit supérieur (LUR) et l'axe d'inclinaison droit inférieur (LDR) dans l'élément latéral droit (54) sont tous les deux décalés vers la gauche (FL) à partir de l'axe de direction droit (SR) comme on peut le voir à partir de la direction avant arrière (FF - FB) du cadre (21).

3. Véhicule s'inclinant (1) selon la revendication 2, dans lequel l'amplitude de décalage de l'axe d'inclinaison gauche supérieur (LUL) est différente de l'amplitude de décalage de l'axe d'inclinaison gauche inférieur (LDL), et
dans lequel l'amplitude de décalage de l'axe d'inclinaison droit supérieur (LUR) est différente de l'amplitude de décalage de l'axe d'inclinaison droit inférieur (LDR).

4. Véhicule s'inclinant (1) selon l'une quelconque des revendications 1 à 3,
dans lequel la distance (W1) entre l'axe d'inclinaison gauche inférieur (LDL) au niveau de l'organe de support d'axe gauche inférieur (53b) et l'axe d'inclinaison droit inférieur (LDR) au niveau de l'organe de support d'axe droit inférieur (54b) est égale à la distance (W2) entre l'axe d'inclinaison gauche supérieur (LUL) au niveau de l'organe de support d'axe gauche supérieur (53a) et l'axe d'inclinaison droit supérieur (LUR) au niveau de l'organe de support d'axe droit supérieur (54a).

5. Véhicule s'inclinant (1) selon l'une quelconque des revendications 1 à 4, comprenant :
un élément de direction (61) qui peut tourner par rapport au cadre (21), et
un mécanisme de transmission de force de direction (63) configuré pour amener l'organe de suspension gauche (7) et l'organe de suspension droit (8) à tourner respectivement autour de l'axe de direction gauche (SL) et de l'axe de direction droit (SR), dans un direction correspondant à la direction de rotation de l'élément de direction (61),
dans lequel le mécanisme de transmission de force de direction (63) comprend :
un élément de transmission (637) configuré pour transmettre la force de rotation de l'élément de direction (61) à l'organe de suspension gauche (7) et à l'organe de suspension droit (8),
un organe de support d'axe d'inclinaison gauche (635b) définissant un axe d'inclinaison gauche (LJL) s'étendant dans la direction avant arrière (FF - FB) du cadre (21), et
un organe de support d'axe d'inclinaison droit (636b) définissant un axe d'inclinaison droit (LJR) s'étendant dans la direction avant arrière (FF - FB) du cadre (21),
dans lequel la partie gauche de l'élément de transmission (637) est couplée à l'organe de suspension gauche (7) de sorte à ce que la partie gauche de l'élément de transmission (637) puisse tourner autour de l'axe d'inclinaison gauche (LJL),
dans lequel la partie droite de l'élément de transmission (637) est couplée à l'organe de suspension droit (8) de sorte à ce que la partie droite de l'élément de transmission (637) puisse tourner autour de l'axe d'inclinaison droit (LJR), et
dans lequel, dans tous les cas où le premier état ou le second état est sélectionné :
la ligne droite à gauche coupe l'organe de support d'axe gauche (635b) comme on peut le voir à partir de la direction avant arrière (FF - FB) du cadre (21), et
la ligne droite à droite coupe l'organe de support d'axe droit (636b) comme on peut le voir à partir de la direction avant arrière (FF - FB) du cadre (21).

6. Véhicule s'inclinant (1) selon la revendication 5, dans lequel la distance (W3) entre l'axe d'inclinaison gauche au niveau de l'organe de support d'axe gauche et l'axe d'inclinaison droit au niveau de l'organe de support d'axe droit est égale à la distance (W2) entre l'axe d'inclinaison gauche supérieur (LUL) au niveau de l'organe de support d'axe gauche supérieur (53a) et l'axe d'inclinaison droit supérieur (LUR) au niveau de l'organe de support d'axe droit supérieur (54a).

7. Véhicule s'inclinant (1) selon l'une quelconque des revendications 1 à 6,
dans lequel le déport au sol (RL1) de la roue avant gauche (31), dans le cas où le premier état est sélectionné, est égal au déport au sol (RL2) de la roue avant gauche (31) dans le cas où le second état est sélectionné, et
dans lequel le déport au sol (RR1) de la roue avant droite (32), dans le cas où le premier état est sélectionné, est égal au déport au sol (RR2) de la roue avant droite (32) dans le cas où le second état est sélectionné.

8. Véhicule s'inclinant (1) selon l'une quelconque des revendications 1 à 7, comprenant :
un élément de direction (61) qui peut tourner par rapport au cadre (21), et
une roue arrière (4) disposée en arrière de la roue avant gauche (31) et de la roue avant droite (32) dans la direction avant arrière (FF - FB) du cadre (21),
dans lequel, dans le cas où le cadre (21) est droit et que l'élément de direction (61) est placé en position neutre, comme on peut le voir à partir de la direction gauche droite (FL - FR) du cadre (21), une ligne droite reliant le point de contact au sol (31g) de la roue avant gauche (31) ou de la roue avant droite (32) et le point de contact au sol (4g) de la roue arrière (4) s'étend parallèlement à chacun de l'axe d'inclinaison gauche supérieur (LUL), de l'axe d'inclinaison gauche inférieur (LDL), de l'axe d'inclinaison droit supérieur (LUR) et de l'axe d'inclinaison droit inférieur (LDR).

9. Procédé permettant de modifier la bande de roulement (TW1, TW2) d'un véhicule s'inclinant (1), le véhicule s'inclinant (1) comprenant :
un cadre (21) qui peut s'incliner vers la gauche (L) et vers la droite (R) du véhicule s'inclinant (1),
une roue avant gauche (31) et une roue avant droite (32) qui sont disposées côte à côte dans la direction gauche droite (FL - FR) du cadre (21),
un organe de suspension gauche (7) supportant la roue avant gauche (31) de sorte à ce que la roue avant gauche (31) puisse tourner autour d'un axe de direction gauche (SL),
un organe de suspension droit (8) supportant la roue avant droite (32) de sorte à ce que la roue avant droite (32) puisse tourner autour d'un axe de direction droit (31), et
un mécanisme de liaison (5) configuré pour modifier les positions de la roue avant gauche (31) et de la roue avant droite (32) par rapport au cadre (21) afin d'amener le cadre (21) à pencher vers la gauche (L) ou vers la droite (R) du véhicule s'inclinant (1),
dans lequel le mécanisme de liaison (5) comprend :
un élément transversal supérieur (51),
un élément transversal inférieur (52) disposé en dessous de l'élément transversal supérieur (51) dans la direction haut bas (FU - FD) du cadre (21),
un élément latéral gauche (53) disposé de sorte à ce que l'axe de direction gauche (SL) s'étende au travers de l'élément latéral gauche (53), et
un élément latéral droit (54) disposé de sorte à ce que l'axe de direction droit (SR) s'étende au travers de l'élément latéral droit (54),
dans lequel l'élément latéral gauche (53) comprend :
un organe de support d'axe gauche supérieur (53a) définissant un axe d'inclinaison gauche supérieur (LUL) s'étendant dans la direction avant arrière (FF - FB) du cadre (21), et
un organe de support d'axe gauche inférieur (53b) définissant un axe d'inclinaison gauche inférieur (LDL) s'étendant dans la direction avant arrière (FF - FB) du cadre (21),
dans lequel l'élément latéral droit (54) comprend :
un organe de support d'axe droit supérieur (54a) définissant un axe d'inclinaison droit supérieur (LUR) s'étendant dans la direction avant arrière (FF - FB) du cadre (21), et
un organe de support d'axe droit inférieur (54b) définissant un axe d'inclinaison droit inférieur (LDR) s'étendant dans la direction avant arrière (FF - FB) du cadre (21),
dans lequel la partie gauche de l'élément transversal supérieur (51) est couplée à l'élément latéral gauche (53) de sorte à ce que la partie gauche de l'élément transversal supérieur (51) puisse tourner autour de l'axe d'inclinaison gauche supérieur (LUL),
dans lequel la partie gauche de l'élément transversal inférieur (52) est couplée à l'élément latéral gauche (53) de sorte à ce que la partie gauche de l'élément transversal inférieur (52) puisse tourner autour de l'axe d'inclinaison gauche inférieur (LDL),
dans lequel la partie droite de l'élément transversal supérieur (51) est couplée à l'élément latéral droit (54) de sorte à ce que la partie droite de l'élément transversal supérieur (51) puisse tourner autour de l'axe d'inclinaison droit supérieur (LUR),
dans lequel la partie droite de l'élément transversal inférieur (52) est couplée à l'élément latéral droit (54) de sorte à ce que la partie droite de l'élément transversal inférieur (52) puisse tourner autour de l'axe d'inclinaison droit inférieur (LDR),
dans lequel, lorsque le cadre (21) est amené à pencher vers la gauche (L) ou vers la droite (R) du véhicule s'inclinant (1) en modifiant les positions de la roue avant gauche (31) et de la roue avant droite (32) par rapport au cadre (21), comme peut le voir à partir de la direction avant arrière (FF - FB) du cadre (21), c'est d'abord une ligne droite reliant l'axe d'inclinaison gauche supérieur (LUL) et l'axe d'inclinaison droit supérieur (LUR) qui s'étend parallèlement à une ligne droite reliant l'axe d'inclinaison gauche inférieur (LDL) et l'axe d'inclinaison droit inférieur (LDR), et c'est aussi une ligne droite reliant l'axe d'inclinaison gauche supérieur (LUL) et l'axe d'inclinaison gauche inférieur (LDL) qui s'étend parallèlement à une ligne droite reliant l'axe d'inclinaison droit supérieur (LUR) et l'axe d'inclinaison droit inférieur (LDR),
dans lequel le procédé comprend :
l'utilisation d'un premier élément latéral (11) et d'un second élément latéral (10) qui doivent être montés sur le véhicule s'inclinant (1),
dans lequel le premier élément latéral (11) comporte un premier axe central (A1), et où le second élément latéral (12) comporte un second axe central (A2),
dans lequel le premier élément latéral (11) inclut un premier axe supérieur (U1) et un premier axe inférieur (D1), et
dans lequel le second élément latéral (12) inclut un second axe supérieur (U2) et un second axe inférieur (D2),
dans lequel, lorsque le premier élément latéral (11) et le second élément latéral (12) sont montés sur le véhicule s'inclinant (1), au moins l'un du premier axe supérieur (U1) et du premier axe inférieur (D1) est décalé du premier axe central (A1) dans la direction gauche droite (FL - FR) du cadre (21) comme peut le voir depuis la direction avant arrière (FF - FB) du cadre (21),
et au moins l'un du second axe supérieur (U2) et du second axe inférieur (D2) est décalé du second axe central (A2) dans la direction gauche droite (FL - FR) du cadre (21) comme peut le voir depuis la direction avant arrière (FF - FB) du cadre (21),
**caractérisé en ce que** le procédé comprend en outre :
l'utilisation du premier élément latéral (11) comme élément latéral gauche (53), le premier axe supérieur (U1) étant l'axe d'inclinaison gauche supérieur (LUL) et le premier axe inférieur (D1) étant l'axe d'inclinaison gauche inférieur (LDL), et l'utilisation du second élément latéral (12) comme élément latéral droit (54) le second axe supérieur (U2) étant l'axe d'inclinaison droit supérieur (LUR) et le second axe inférieur (D2) étant l'axe d'inclinaison droit inférieur (LDR) dans un premier état,
l'utilisation du premier élément latéral (11) comme élément latéral droit (54), le premier axe supérieur (U1) étant l'axe d'inclinaison droit supérieur (LUR) et le premier axe inférieur (D1) étant l'axe d'inclinaison droit inférieur (LDR), et l'utilisation du second élément latéral (12) comme élément latéral gauche (53) le second axe supérieur (U2) étant l'axe d'inclinaison gauche supérieur (LUL) et le second axe inférieur (D2) étant l'axe d'inclinaison gauche inférieur (LDL) dans un second état,
dans lequel, dans tous les cas où le premier état ou le second état est sélectionné :
l'amplitude de décalage associée à l'élément latéral gauche (53) est égale à l'amplitude de décalage associée à l'élément latéral droit (53),
une ligne droite à gauche reliant l'axe d'inclinaison gauche supérieur (LUL) et l'axe d'inclinaison gauche inférieur (LDL) chevauche la surface de contact avec le sol (31a) de la roue avant gauche (31) comme on peut le voir à partir de la direction avant arrière (FF - FB) du cadre (21), et
une ligne droite à droite reliant l'axe d'inclinaison droit supérieur (LUR) et l'axe d'inclinaison droit inférieur (LDR) chevauche la surface de contact avec le sol (32a) de la roue avant droite (32) comme on peut le voir à partir de la direction avant arrière (FF - FB) du cadre (21).
